# EUROPÄISCHE PATENTSCHRIFT

(11) **EP 2 201 224 B1**
(45) Veröffentlichungstag und Bekanntmachung des Hinweises auf die Patenterteilung: **15.04.2015**
(21) Anmeldenummer: 08838747.7
(22) Anmeldetag: 09.10.2008
(51) Int. Cl.: F01M 13/04, B01D 46/00, F01M 13/00

(54) **ÖLNEBELABSCHEIDER EINER BRENNKRAFTMASCHINE**
OIL MIST SEPARATOR OF AN INTERNAL COMBUSTION ENGINE
SÉPARATEUR DE VAPEUR D'HUILE D'UN MOTEUR À COMBUSTION INTERNE

(30) Priorität: 12.10.2007 DE 202007014378 U
(43) Veröffentlichungstag der Anmeldung: 30.06.2010
(73) Patentinhaber: Hengst SE & Co. KG, 48147 Münster (DE)
(72) Erfinder: HEINEN, Arno, 59387 Ascheberg-Herbern (DE); PIETSCHNER, Sieghard, 48268 Greven (DE)
(74) Vertreter: Linnemann, Winfried
(86) Internationale Anmeldenummer: PCT/EP2008/008528
(87) Internationale Veröffentlichungsnummer: WO 2009/049818

(56) Entgegenhaltungen:
- DE-U1- 29 700 579
- JP-U- H02 127 722
- US-A- 3 712 030
- US-A- 4 627 406

## Beschreibung

Die Erfindung betrifft einen Ölnebelabscheider einer Brennkraftmaschine, mit mindestens einem von dem Kurbelgehäuseentlüftungsgas der Brennkraftmaschine durchströmbaren gasdurchlässigen Diffusionsabscheidekörper, in welchem in dem Kurbelgehäuseentlüftungsgas enthaltener Ölnebel aus dem Gas abscheidbar ist. Die DE 197 29 439 A1 zeigt ein geschlossenes Kurbelgehäuseventilationssystem eines Motors, das auf eine Unterdruckunterstützung von einem Turboladereinlass angewiesen ist, um Leckgase vom Kurbelgehäuse anzusaugen. Das Ventilationssystem enthält ein Koaleszerfilter, das von den Leckgasen mitgerissene Ölpartikel filtert, bevor sie in den Turboladereinlass gelangen. Ein Entlastungsventil verhindert, dass das Kurbelgehäuse als Folge eines durch entweder ein verstopftes Koaleszerfilter oder eine Fehlfunktion des Motors verursachten Gegendrucks unter einen zu hohen Druck gesetzt wird. Ein Unterdruck begrenzendes Ventil verhindert, dass die durch den Lufteinlass im Turbolader erzeugte Unterdruckunterstützung einen zu niedrigen absoluten Druck erzeugt. Dadurch wird ein Druckungleichgewicht über die Dichtungen des Turboladers verhindert. Ein Umgehungsventil verhindert auch, dass das Kurbelgehäuse unter einen zu hohen Druck gesetzt wird, indem der Strom an Leckgasen um das Koaleszerfilter herum geführt wird, falls der Druck im Kurbelgehäuse zu groß wird.

Dieses bekannte Kurbelgehäuseventilationssystem erfordert ersichtlich einen hohen technischen Aufwand, weil es neben dem Koaleszerfilter zwei Ventile umfasst, die den Herstellungsaufwand deutlich erhöhen. Ein weiterer Nachteil wird bei diesem bekannten Ventilationssystem darin gesehen, dass in einem verstopften Zustand des Koaleszerfilters, bei dem das Umgehungsventil öffnet, die Leckgase nicht mehr oder nur noch in einem geringen Umfang von den mitgerissenen Ölpartikeln gereinigt werden oder sogar ungereinigt in die Umwelt entlassen werden.

Die DE 600 23 217 T2 zeigt einen Gas-Flüssigkeits-Trägheitsabscheider zur Entfernung und Verschmelzung flüssiger Partikel aus einer Gas-Flüssigkeits-Strömung. Dieser Abscheider weist ein Gehäuse mit einem Einlass zur Aufnahme der Gas-Flüssigkeits-Strömung und einen Auslass zum Ableiten einer Gasströmung auf. Weiter weist der Abscheider einen Trägheitskollektor in dem Gehäuse, der eine Sammlerfläche in dem Weg der Gas-Flüssigkeits-Strömung aufweist und der einen scharfen Richtungswechsel derselben verursacht, auf. Der Auslass nimmt die Gasströmung nach dem scharfen Richtungswechsel auf. Das Gehäuse weist einen axialen Strömungsweg durch dasselbe auf, einschließlich eines ersten Strömungswegabschnitts für die Gas-Flüssigkeits-Strömung zwischen dem Einlass und einem Abstand an der Sammelfläche und eines zweiten Strömungswegabschnitts für die Gasströmung zwischen dem Abstand und dem Auslass. Weiter ist hier ein Durchströmungsfilter in dem zweiten Strömungswegabschnitt vorgesehen, der einen Sicherheitsfilter bereitstellt, der von der Gasströmung nach der Abscheidung an dem Trägheitskollektor mitgerissene Gaspartikel einfängt. Der Strömungsweg weist genau zwei 90°-Richtungsänderungen vor dem Eintritt in den Durchströmungsfilter auf, wobei eine erste Richtungsänderung in dem Abstand an der Sammelfläche und eine zweite Richtungsänderung in einem von erstem und zweitem Strömungswegabschnitt angeordnet ist, und wobei die Gasströmung nach den zwei Richtungsänderungen axial durch den Durchströmungsfilter zu dem Auslass strömt. Im Gehäuse ist eine Düsenstruktur vorgesehen, die eine Mehrzahl von Düsen aufweist, die die Gas-Flüssigkeits-Strömung von dem Einlass aufnehmen und die Gas-Flüssigkeits-strömung durch die Düsen gegen die Sammelfläche beschleunigen. Die Sammelfläche und die Düsen sind durch einen Abstand ausreichend voneinander beabstandet, um einen übermäßigen Widerstand zu vermeiden. Die Sammelfläche ist eine raue, poröse Sammelfläche, die eine Abscheidung flüssiger Partikel aus der Gas-Flüssigkeits-Strömung mit geringerer Partikelgröße als bei einer glatten, nicht porösen Prallfläche bewirkt, und dies ohne die scharfe Grenzgröße für die Partikelabscheidung der letzteren und die Sammlung der flüssigen Partikel in der porösen Sammelfläche.

Bei diesem Abscheider handelt es sich also kurz gesagt um eine Reihenschaltung eines Prallabscheiders und eines Durchströmungsfilters, wobei die Gas-Flüssigkeits-Strömung zunächst den Prallabscheider und danach das Durchströmungsfilter durchläuft. Zwar wird im Betrieb dieses Abscheiders der größte Teil der Ölpartikel schon im Prallabscheider abgeschieden, es gelangt jedoch immer noch ein gewisser Anteil an Ölpartikeln in das Durchströmungsfilter, wodurch sich im Laufe der Betriebszeit des Abscheiders der Durchflusswiderstand des Durchströmungsfilters durch darin dauerhaft verbleibende Ablagerungen erhöht, bis schließlich das Durchströmungsfilter vollständig verstopft ist. In diesem Zustand ist dann keine weitere Funktion des Abscheiders mehr möglich und es kommt zu Fehlfunktionen des zugehörigen Motors, sofern nicht rechtzeitig im Rahmen von Wartungsmaßnahmen das Durchströmungsfilter gereinigt oder ersetzt wird.

Die DE 10 2005 043 198 A1 zeigt einen Gas-Flüssigkeits-Trägheitsabscheider zum Entfernen von Flüssigkeitspartikel aus einer Gas-Flüssigkeits-Strömung, mit einem Gehäuse, das einen Einlass zur Aufnahme der Gas-Flüssigkeits-Strömung und einen Auslass zum Ableiten der Gas-Strömung aufweist. Außerdem besitzt der Abscheider eine Düsenstruktur in dem Gehäuse, die eine oder mehrere Düsen mit einer oder mehreren Öffnungen aufweist zur Aufnahme der Gas-Flüssigkeits-Strömung von dem Einlass und zum Beschleunigen der Gas-Flüssigkeits-Strömung dadurch, wobei die eine oder mehreren Öffnungen der Düsen eine Gesamtströmung dadurch bereit stellen. Weiter umfasst der Abscheider einen Trägheitsprallkollektor in dem Gehäuse in dem Weg der beschleunigten Gas-Flüssigkeits-Strömung, wobei der Trägheitsprallkollektor die Abscheidung der Flüssigkeitspartikel aus der Gas-Flüssigkeits-Strömung verursacht. Weiterhin ist ein Aktuator zur Strömungsänderung vorgesehen, mittels dessen die Gesamtströmung durch die Öffnungen, vorzugsweise in Abhängigkeit von einem vorgegebenen Parameter, veränderbar ist.

Bei diesem bekannten Abscheider wird als nachteilig angesehen, dass er mit dem Aktuator ein bewegliches, gezielt zu verstellendes Element umfasst, das im Betrieb des Abscheiders einem Verschleiß unterliegt und das die Herstellung des Abscheiders aufwendig macht. Zudem besteht bei beweglichen Teilen in einem Ölnebelabscheider immer die Gefahr einer Funktionsstörung beweglicher Teile dadurch, dass die im Kurbelgehäuseentlüftungsgas mitgeführten Ölpartikel und sonstigen Bestandteile eine klebrige Konsistenz aufweisen, die die Beweglichkeit des Aktuators und der damit verbundenen Teile mit zunehmender Betriebszeit des Abscheiders erschwert oder schließlich ganz verhindert.

Aus der DE 10 2006 056 789 A1 ist eine Trägheitsaufprallvorrichtung bekannt, die eine Gasstromflussrate zum Abtrennen von Ölteilchen in Emissionen eines Kurbelgehäuses einer Brennkraftmaschine einsetzt. Dabei ist ein Gehäuse vorgesehen, das eine Oberseite, eine Unterseite und Seitenwände aufweist, die sich im Wesentlichen ohne Unterbrechung dazwischen erstrecken, um einen Hohlkörper festzulegen, der einen Innenraum mit einer inneren Oberfläche und einen Außenraum mit einer äußeren Oberfläche aufweist. Die Oberseite weist eine Öffnung auf, um zu ermöglichen, dass eine Flussdüse dort hindurch geht, wobei die Düse einen Durchmesser W und eine Verengung aufweist, die sich über eine vorbestimmte Entfernung T erstreckt und an einer vorbestimmten Entfernung S gegenüber der Unterseite aufhört. Die Düse steht in Fluidverbindung mit dem Gasstromfluss von dem Brennkraftmaschinenkurbelgehäuse. Die Unterseite ist in enger Nähe zu einer Wärmequelle angeordnet, um als eine primäre Aufprallvorrichtungsplatte zu dienen. Weiterhin sind die Seitenwände mit sekundären Aufprallvorrichtungsplatten versehen, die sich an vorbestimmten Orten entlang der inneren Oberfläche befinden und sich in den inneren Raum erstrecken. Schließlich ist eine Seitenwand mit einer Öffnung versehen, um einen Gasstromfluss von dem Brennkraftmaschinenkurbelgehäuse durch das Gehäuse über die primäre Aufprallvorrichtungsplatte, über die sekundären Aufprallvorrichtungsplatten und aus der Öffnung in der Seitenwand heraus zu einem Turbolader zu ermöglichen.

Bei dieser Vorrichtung handelt es sich um einen reinen Prallabscheider, der einen guten Wirkungsgrad für relativ große Ölpartikel, die das Kurbelgehäuseentlüftungsgas enthält, bietet. Gerade bei modernen Brennkraftmaschinen tritt aber in zunehmendem Maße ein feinerer Ölnebel auf, der aus kleinen Ölpartikeln besteht, die in einem reinen Prallabscheider durch vorrangig Massenträgheitskräfte nur noch mit vermindertem Wirkungsgrad abgeschieden werden können. Dadurch kommt es zu einer unvollständigen Entölung des Kurbelgehäuseentlüftungsgases und zu einem Durchtritt von Ölanteilen durch den Abscheider hindurch, was zu Störungen an der Brennkraftmaschine führen kann, beispielsweise weil in einem die Gase aus dem Abscheider aufnehmenden Ansaugtrakt der Brennkraftmaschine liegende Komponenten durch Öl verschmutzt werden, wie Drosselklappengelenke oder Luftmengenmesser. Zudem ist die Wahl der Anordnung dieses Abscheiders dadurch eingeschränkt, dass er an einer heißen Stelle, also nahe an im Betrieb heißen Teilen der zugehörigen Brennkraftmaschine, angeordnet werden muss.

Für die vorliegende Erfindung stellt sich deshalb die Aufgabe, einen Ölnebelabscheider der eingangs genannten Art zu schaffen, der die vorstehend dargelegten Nachteile vermeidet und der bei einem einfachen Aufbau und kostengünstiger Herstellbarkeit einen hohen Abscheidewirkungsgrad, auch für feine Ölpartikel, sowie eine lange wartungsfreie Einsatzzeit aufweist und der dabei jederzeit einen unzulässig hohen Druck im Kurbelgehäuse der zugehörigen Brennkraftmaschine vermeidet.

Die Lösung dieser Aufgabe gelingt erfindungsgemäß mit einem Ölnebelabscheider der eingangs genannten Art, der dadurch gekennzeichnet ist, dass in dem/jedem Diffusionsabscheidekörper zusätzlich durchgehende freie Gaskanäle ausgebildet sind und dass in Strömungsrichtung des Kurbelgehäuseentlüftungsgases gesehen hinter den Gaskanälen mit Abstand zu dem/jedem Diffusionsabscheidekörper wenigstens ein weiterer Diffusionsabscheidekörper oder eine Prallabscheidefläche angeordnet ist.

Der erfindungsgemäße Ölnebelabscheider bietet vorteilhaft bei einem sehr einfachen konstruktiven Aufbau über eine sehr lange Einsatzzeit einen sehr hohen Anteil an sehr wirksamer Diffusionsabscheidung. Dabei erfolgt das Abscheiden des Ölnebels je nach Zustand des Diffusionsabscheidekörpers in unterschiedlichen Verhältnissen zwischen den beiden Abscheidemechanismen. In einem frischen Zustand des Diffusionsabscheidekörpers hat dieser eine sehr hohe Durchlässigkeit, so dass der größte Teil des Volumenstroms des Kurbelgehäuseentlüftungsgases den oder die Diffusionsabscheidekörper durchströmt, wodurch im Kurbelgehäuseentlüftungsgas mitgeführter Ölnebel in Form von Ölpartikeln innerhalb des Diffusionsabscheidekörpers überwiegend durch Diffusionsabscheidung abgeschieden wird. Die Gasgeschwindigkeit ist dabei überall, auch in den freien Gaskanälen, sehr gering, wodurch auch feinste Partikel durch Diffusionsabscheidung effektiv abgeschieden werden; diese Effektivität ist mit einem reinen Prallabscheider nicht möglich. Dabei spielt der Teilvolumenstrom des Kurbelgehäuseentlüftungsgases, der durch die freien Gaskanäle strömt, anteilmäßig nur eine geringe Rolle, weil dieser Teilvolumenstrom bei geringem Strömungswiderstand des Diffusionsabscheidekörpers sehr klein ist. Bei sich im Laufe der Einsatzzeit des Ölnebelabscheiders zunehmend zusetzendem Diffusionsabscheidekörper, also bei einem zunehmenden Durchflusswiderstand des Diffusionsabscheidekörpers, steigt der Teilvolumenstrom des Kurbelgehäuseentlüftungsgases, der durch die freien Gaskanäle strömt, an. Aus diesem Teilvolumenstrom des Kurbelgehäuseentlüftungsgases erfolgt eine Ölnebelabscheidung entweder durch den weiteren, dann noch geringer beladenen Diffusionsabscheidekörper oder durch die Prallabscheidung an der Prallabscheidefläche. In der Ausführung mit zwei Diffusionsabscheidekörpern durchströmt das Kurbelgehäuseentlüftungsgas hier bei einem frischen Zustand der Diffusionsabscheidekörper zwei in Reihe geschaltete Diffusionsabscheidekörper, wodurch ein besonders hoher Abscheidewirkungsgrad durch Diffusionsabscheidung erreicht wird. Der Gasteilstrom, der durch die freien Gaskanäle des ersten Diffusionsabscheidekörpers strömt, fließt bei frischen Diffusionsabscheidekörpern anschließend durch den weiteren Diffusionsabscheidekörper hindurch, sodass auch dieser Gasteilstrom durch Diffusionsabscheidung entölt wird. Bei zunehmend beladenen Diffusionsabscheidekörpern strömt das Gas zunehmend durch die freien Gaskanäle, was die Kurbelgehäuseentlüftung gewährleistet. Eine Entölung des Kurbelgehäuseentlüftungsgases erfolgt dann immerhin noch durch Prallabscheidung. Somit behält der Ölnebelabscheider über lange Einsatzzeiten einen hohen Abscheidewirkungsgrad durch Diffusionsabscheidewirkung und ein zu hoher Druckabfall über dem Ölnebelabscheider, der zu einem zu hohen Druck im Kurbelgehäuse der zugehörigen Brennkraftmaschine führen könnte, wird auch nach langer Betriebszeit und bei zunehmend beladenem Diffusionsabscheidekörper oder -körpern vermieden. Da die Diffusionsabscheidekörper Abstand voneinander aufweisen oder die Prallabscheidefläche jeweils Abstand von dem in Strömungsrichtung davor liegenden Diffusionsabscheidekörper mit den Gaskanälen aufweist, wird jeweils ein Spaltraum frei gehalten, der für die Führung des Kurbelgehäuseentlüftungsgases genutzt wird. Somit sind vorteilhaft auch keine besonderen Anordnungen für die Ausbildung von Gasströmungswegen erforderlich. Aufgrund des Fehlens jeglicher beweglicher Elemente in dem vorstehend beschriebenen Ölnebelabscheider ist dieser kostengünstig herstellbar und zuverlässig in seiner Funktion.

Bevorzugt ist weiter vorgesehen, dass die Gaskanäle senkrecht zu einer Flächenebene des Diffusionsabscheidekörpers verlaufen und dass der weitere Diffusionsabscheidekörper oder die Prallabscheidefläche parallel zur Flächenebene des Diffusionsabscheidekörpers verläuft. In dieser Ausgestaltung ist eine besonders platzsparende Bauweise des Ölnebelabscheiders möglich.

Ein weiterer Beitrag zum Niedrighalten des Strömungswiderstandes des Ölnebelabscheiders besteht darin, dass der weitere Diffusionsabscheidekörper oder die Prallabscheidefläche zu den Gaskanälen des Diffusionsabscheidekörpers versetzt wenigstens einen Gasdurchlass aufweist. Der Gasdurchlass hat dabei zweckmäßig einen Strömungsquerschnitt, der größer ist als der Strömungsquerschnitt der Gaskanäle. Hierdurch wird der Druckabfall über den Ölnebelabscheider niedrig gehalten, was für den Betrieb wesentlich ist, da an Brennkraftmaschinen häufig nur eine geringe Druckdifferenz zum Betreiben des Ölnebelabscheiders zur Verfügung steht.

Eine weitere Ausgestaltung des Ölnebelabscheiders schlägt vor, dass in Strömungsrichtung des Kurbelgehäuseentlüftungsgases gesehen hinter dem Gasdurchlass mit Abstand zu diesem wenigstens ein weiterer Diffusionsabscheidekörper oder eine weitere Prallabscheidefläche angeordnet ist. In dieser Ausführung des Ölnebelabscheiders wird der Gasstrom durch den Ölnebelabscheider einer zweifachen Prallabscheidung unterzogen, wenn der Diffusionsabscheidekörper zunehmend beladen wird. Solange der Abscheidekörper noch gut durchlässig ist, wird die Abscheidung im Diffusionsabscheidekörper vorgenommen. Insgesamt ist in jedem Betriebszustand des Ölnebelabscheiders und des darin angeordneten Diffusionsabscheidekörpers ein hoher Abscheidewirkungsgrad gewährleistet.

Weiter ist vorgesehen, dass die Prallabscheidefläche oder mindestens eine der Prallabscheideflächen durch eine geschlossene, gas- und öldichte Prallplatte gebildet ist. In dieser Ausführung kann die Prallabscheidefläche besonders einfach hergestellt und in den Ölnebelabscheider integriert werden.

Um den Ölnebelabscheider besonders kompakt gestalten zu können, wird vorgeschlagen, dass der oder die Diffusionsabscheidekörper und die Prallabscheidefläche oder -flächen jeweils eine hohlzylindrische Form haben und konzentrisch zueinander um eine Mittelachse angeordnet sind. In dieser Ausführung wird bei einem geringen Bauvolumen des Ölnebelabscheiders eine große Fläche für den oder die Diffusionsabscheidekörper zur Verfügung gestellt, was eine gute Ölnebelabscheidung bei geringem Strömungswiderstand bietet.

Ein dazu alternativer Vorschlag sieht vor, dass der Diffusionsabscheidekörper oder die Diffusionsabscheidekörper und die Prallabscheidefläche oder -flächen jeweils im Querschnitt gesehen spiralförmig angeordnet sind.

Eine weitere Alternative sieht vor, dass der Diffusionsabscheidekörper oder die Diffusionsabscheidekörper und die Prallplatte oder die Prallplatten eine flache ebene Form haben und parallel zueinander angeordnet sind. In dieser Ausgestaltung kann der Ölnebelabscheider besonders flach gestaltet werden, was bei manchen Einbausituationen von Vorteil sein kann.

Damit im Betrieb des Ölnebelabscheiders keine unerwünschten Deformationen des Diffusionsabscheidekörpers oder der Diffusionsabscheidekörper auftreten, wird weiter vorgeschlagen, dass zwischen den Diffusionsabscheidekörpern oder zwischen dem Diffusionsabscheidekörper und der nachgeordneten Prallabscheidefläche wenigstens ein gas- und öldurchlässiger Stützkörper angeordnet ist. Dieser Stützkörper sorgt dafür, dass der/jeder Diffusionsabscheidekörper auch in einem beladenen Zustand, der den Druckabfall über den Diffusionsabscheidekörper erhöht, seine gewünschte, vorgegebene Form behält und dass Strömungswege in Strömungsrichtung hinter dem Diffusionsabscheidekörper zuverlässig offen gehalten werden.

Bevorzugt ist der Stützkörper durch ein dreidimensionales Gitter gebildet, da ein solches Gitter einerseits einfach und kostengünstig herstellbar ist und andererseits die gewünschte Wirkung zuverlässig erzielt.

Zusätzlich kann der Stützkörper eine Form und/oder Struktur haben, die für das den Stützkörper durchströmende Gas eine Gasleitfunktion und/oder für den in dem den Stützkörper durchströmenden Gas enthaltenen Ölnebel eine Abscheidefunktion hat.

Der Diffusionsabscheidekörper kann Körper aus unterschiedlichen Materialien aufweisen. Wesentlich ist dabei, dass der Diffusionsabscheidekörper in der Lage ist, aus dem ihn durchströmenden Kurbelgehäuseentlüftungsgas die darin mitgeführten, insbesondere feinen Ölpartikel abzuscheiden und innerhalb des Diffusionsabscheidekörpers zu speichern und/oder innerhalb des Diffusionsabscheidekörpers einer Ölabführung zuzuleiten. Eine erste diesbezügliche bevorzugte Ausgestaltung sieht vor, dass der oder jeder Diffusionsabscheidekörper mindestens einen Faser- oder Schaumkörper aufweist.

Insbesondere zwecks einfacher Herstellbarkeit ist vorgesehen, dass ein den Faser- oder Schaumkörper bildendes Material in einem Ausgangszustand bahnförmig ist und eine geringere Dicke als der Faser- oder Schaumkörper aufweist und dass das bahnförmige Material zu dem Faser- oder Schaumkörper gewickelt ist. Dabei kann die Bahn beispielsweise unmittelbar auf den vorstehend erwähnten Stützkörper aufgewickelt sein. Alternativ besteht die Möglichkeit, zunächst die Bahn auf einem Hilfskörper zu dem Faser- oder Schaumkörper zu wickeln und dann nach Entfernen des Hilfskörpers den Stützkörper in den Faser- oder Schaumkörper einzusetzen.

Eine weitere herstellungstechnisch günstige Ausführung schlägt vor, dass ein den Faser- oder Schaumkörper bildendes Material in einem Ausgangszustand bahnförmig ist und eine der Dicke des Faser- oder Schaumkörper entsprechende Dicke aufweist und dass das bahnförmige Material zusammen mit dem in einem Ausgangszustand ebenfalls bahnförmigen Stützkörper in Spiralform zu dem Faser- oder Schaumkörper oder zu mehreren Faser- oder Schaumkörpern gewickelt ist. Dies ergibt einen Ölnebelabscheider, bei dem nicht separate Diffusionsabscheidekörper konzentrisch zueinander angeordnet sind, sonders es liegt eine Spiralform vor, die aber zu den gleichen funktionalen Eigenschaften des Ölnebelabscheiders führt. Die Zahl der übereinander gewickelten Lagen kann dabei zweckgemäß variiert werden. Zwischen den Windungen der Spirale wird ein Freiraum freigehalten, hier mittels des Stützkörpers.

Eine weitere geeignete Formgestaltung besteht darin, dass der/jeder Faser- oder Schaumkörper die Form eines Hohlprofils, vorzugsweise eines Hohlzylinders, hat. Durch abgestufte Durchmesser können bei Bedarf mehrere Körper konzentrisch zueinander angeordnet werden.

Insbesondere für nicht aus sich selbst formbeständige Faser- oder Schaumkörper wird vorgeschlagen, dass der oder jeder Diffusionsabscheidekörper neben dem mindestens einen Faser- oder Schaumkörper einen den/die Faser- oder Schaumkörper tragenden Tragkörper aufweist.

In einer weiteren Ausgestaltung ist bevorzugt der oder jeder Faserkörper aus einem Filzmaterial aus thermo- oder duroplastischen Kunststofffasern oder Metallfasern oder Karbonfasern oder Glasfasern oder aus einem Papiermaterial hergestellt.

Alternativ kann der Faserkörper aus einem Vlies oder Gewebe oder Gelege oder Gewirk oder Gestrick aus thermo- oder duroplastischen Kunststofffasern oder Metallfasern oder Karbonfasern oder Glasfasern hergestellt sein.

Bevorzugt ist der Schaumkörper aus einem Kunststoff- oder Metall- oder Glasschaum hergestellt.

Zweckmäßig kann der Schaumkörper aus einem offenzelligen thermo- oder duroplastischen Schaumkunststoff hergestellt sein.

Weiter besteht die Möglichkeit, dass der oder jeder Diffusionsabscheidekörper mindestens einen Sinterkörper aufweist.

Die oben erwähnten freien Gaskanäle im Diffusionsabscheidekörper können unterschiedlich ausgestaltet und erzeugt sein. Eine erste diesbezügliche Ausführung schlägt vor, dass die Gaskanäle unmittelbar in das Material des Faserkörpers oder Schaumkörpers oder Sinterkörpers eingeschmolzen oder eingeschweißt oder eingebohrt oder eingestanzt oder eingestochen oder eingeschnitten sind. In dieser Ausgestaltung ist eine besonders einfache Fertigung gewährleistet, da keine besonderen Bauteile für die Gaskanäle dauerhaft in dem Faserkörper oder Schaumkörper oder Sinterkörper angebracht werden müssen.

Alternativ können die Gaskanäle durch in das Material des Faserkörpers oder Schaumkörpers oder Sinterkörpers eingesteckte Hülsen gebildet sein. In dieser Ausführung ist zwar der Aufwand etwas höher, jedoch bieten die eingesteckten Hülsen den Vorteil, dass die Gaskanäle mit besonders exakten und dauerhaft beständigen Konturen hergestellt werden können. Zur Lagesicherung sind die Hülsen bei Bedarf in geeigneter Weise im Körper fixiert, z.B. durch Verkleben oder Verschweißen oder durch beidseitige Kragen.

Statt im Material des Faserkörpers oder Schaumkörpers oder Sinterkörpers können die Gaskanäle auch in einem Übergangsbereich zwischen mindestens einem Stirnende oder Rand des Faserkörpers oder Schaumkörpers oder Sinterkörpers und einem diesem benachbarten Bereich des zugehörigen Tragkörpers angeordnet sein. Hiermit ist insbesondere eine Formbeständigkeit der Gaskanäle einfacher zu erzielen.

In einer Ausgestaltung ist vorgesehen, dass der Tragkörper an seiner dem Faserkörper oder Schaumkörper oder Sinterkörper zugewandten Seite zu diesem hin offene Nuten aufweist, die durch das Stirnende oder den Rand des Faserkörpers oder Schaumkörpers oder Sinterkörpers zu den Gaskanälen begrenzt sind. Hier wird die Fertigung besonders einfach.

In einer anderen Ausgestaltung ist vorgesehen, dass der Tragkörper zwei- oder mehrteilig ist und dass ein Tragkörperteil an seiner dem Stirnende oder Rand des Faserkörpers oder Schaumkörpers oder Sinterkörpers zugewandten Seite einen oder mehrere vorspringende Stollen oder Paare von Stollen besitzt, die im verbundenen Zustand der Tragkörperteile den Faserkörper oder Schaumkörper oder Sinterkörper randseitig partiell eindrücken und so die Gaskanäle bilden. Hier werden die Gaskanäle einfach durch das Verbinden der Tragkörperteile miteinander gebildet.

In einer besonders einfach herstellbaren Ausführung weisen die Gaskanäle über ihre gesamte Länge jeweils einen konstanten Querschnitt auf.

Bevorzugt haben dabei die Gaskanäle einen runden oder mehreckigen oder spaltartigen Querschnitt.

Zur Erzielung günstiger Strömungsverhältnisse mit geringen Strömungswiderständen in den Gaskanälen können diese erfindungsgemäß eingangsseitig mit einem Einströmtrichter ausgebildet sein.

Eine hohe Ausströmgeschwindigkeit des Kurbelgehäuseentlüftungsgases aus den Gaskanälen ist für die Prallabscheidung an der Prallabscheidefläche im Falle von stark beladenen Diffusionsabscheidekörpern günstig. Wenn eine besonders hohe Strömungsgeschwindigkeit erzielt werden soll, können erfindungsgemäß die Gaskanäle ausgangsseitig mit einer düsenartigen Verengung ausgebildet sein. Zudem hat eine hohe Gasgeschwindigkeit in den Gaskanälen den Vorteil, dass eine Selbstreinigungswirkung erzielt wird, so dass ein Zusetzen der Gaskanäle praktisch nicht auftreten kann.

Zur Sicherstellung eines störungsfreien Betriebes der zugehörigen Brennkraftmaschine auch bei stark beladenem Diffusionsabscheidekörper ist zweckmäßig vorgesehen, dass der Ölnebelabscheider, insbesondere der addierte Strömungsquerschnitt aller Gaskanäle, so ausgelegt und bemessen ist, dass auch in einem stark oder maximal beladenen Zustand des Diffusionsabscheidekörpers oder der Diffusionsabscheidekörper ein maximal zulässiger Druckabfall über dem Ölnebelabscheider nicht überschritten wird.

Wenn bei frischem Diffusionsabscheidekörper ein Gasfluss durch die Gaskanäle vermieden werden soll, besteht die Möglichkeit, dass der weitere Diffusionsabscheidekörper oder der noch weitere Diffusionsabscheidekörper oder die Prallabscheidefläche oder mindestens eine der Prallabscheideflächen oder jeweils ein Teil davon relativ zu den Gaskanälen oder zu dem Gasdurchlass gegen eine Rückstellkraft so verstellbar ist, dass bei einem Differenzdruck über dem Ölnebelabscheider unterhalb eines vorgebbaren Grenzwertes die Gaskanäle und der Gasdurchlass durch den weiteren Diffusionsabscheidekörper oder den noch weiteren Diffusionsabscheidekörper oder die Prallabscheidefläche verschlossen sind, und dass bei einem Differenzdruck über dem Ölnebelabscheider oberhalb eines vorgebbaren Grenzwertes die Gaskanäle und der Gasdurchlass durch Verschieben des weiteren Diffusionsabscheidekörpers oder des noch weiteren Diffusionsabscheidekörpers oder der Prallabscheidefläche(n) gegen die Rückstellkraft geöffnet sind. Dieses Verstellen erfolgt vorteilhaft selbsttätig ohne Hilfseinrichtungen oder -antriebe, wodurch nur ein geringer technischer Aufwand zur Erzielung dieser Funktion getrieben werden muss. Das verstellbare Element bildet dabei einen Ventilkörper; die Rückstellkraft kann eine Feder erzeugen oder der Ventilkörper kann selbst federnd ausgebildet sein.

Alternativ kann den Gaskanälen oder dem Gasdurchlass mindestens ein gesondertes Ventil zugeordnet sein, z.B. in Form eines Teller- oder Blattventils.

Aufgrund seiner vorstehend dargelegten Gestaltungen kann der Ölnebelabscheider eine Einsatzzeit aufweisen, die der Lebensdauer der zugehörigen Brennkraftmaschine entspricht. Um dennoch eine bedarfsweise Wartung des Ölnebelabscheiders möglichst schnell und einfach durchführen zu können, schlägt die Erfindung vor, dass der Ölnebelabscheider ein Gehäuse aufweist, das im Betrieb mit einem abnehmbaren Gehäusedeckel verschlossen ist, und dass der oder die Diffusionsabscheidekörper eine austauschbare Baueinheit bilden. Mit dem Abnehmen des Deckels werden der oder die Diffusionsabscheidekörper zugänglich und können aus dem Gehäuse entnommen werden und ein oder mehrere neue Diffusionsabscheidekörper können ebenso schnell in das Gehäuse eingebaut werden.

Bevorzugt sind der Ölnebelabscheider und die zughörige Brennkraftmaschine Teile eines Kraftfahrzeuges. Insbesondere in dieser Verwendung des Ölnebenabscheiders kommen dessen Vorteile, nämlich seine besonders kompakte Bauweise bei hohem Wirkungsgrad und zuverlässig dauerhafter Funktion, besonders zum Tragen.

Im Folgenden werden Ausführungsbeispiele der Erfindung anhand einer Zeichnung erläutert. Die Figuren der Zeichnung zeigen:
- Figur 1: einen Ölnebelabscheider in einer ersten Ausführung im Längsschnitt,
- Figur 2: den Ölnebelabscheider in zwei weiteren Ausführungen, im Längsschnitt,
- Figur 3: den Ölnebelabscheider in einer vierten Ausführung, im Längsschnitt,
- Figur 4: den Ölnebelabscheider in einer fünften Ausführung, im Längsschnitt,
- Figur 5: den Ölnebelabscheider in einer sechsten Ausführung, im Längsschnitt,
- Figur 6: den Ölnebelabscheider in einer siebten Ausführung, im Längsschnitt,
- Figur 7: ein Detail des Ölnebelabscheiders mit einem Ausschnitt aus zwei Diffusionsabscheidekörpern und mit einem Gaskanal, in einer vergrößerten Darstellung im Längsschnitt,
- Figur 8: das Detail aus Figur 7 in einer geänderten Ausführung, in gleicher Darstellungsweise wie in Figur 7,
- Figur 9: das Detail aus Figur 7 in einer weiteren Ausführung, in gleicher Darstellungsweise,
- Figur 10: das Detail aus Figur 7 in einer weiteren geänderten Ausführung, wieder in gleicher Darstellungsweise, und
- Figur 11: den Ölnebelabscheider in einer achten Ausführung, im Längsschnitt,
- Figur 12: ein schematisches Schaltbild des Ölabscheiders gemäß Figur 1,
- Figur 13: den Ölnebelabscheider in einer neunten Ausführung, im Längsschnitt,
- Figur 14: ein vergrößertes Detail des Ölnebelabscheiders aus Figur 13,
- Figur 15: den Ölnebelabscheider in einer neunten Ausführung, im Längsschnitt,
- Figur 16: einen Tragkörperteil als vergrößertes Detail des Ölnebelabscheiders aus Figur 15, in perspektivischer Ansicht
- Figur 17: ein Detail des Ölnebelabscheiders aus Figur 15, in Seitenansicht, und
- Figur 18: das Detail aus Figur 17 in einer geänderten Ausführung, ebenfalls in Seitenansicht.

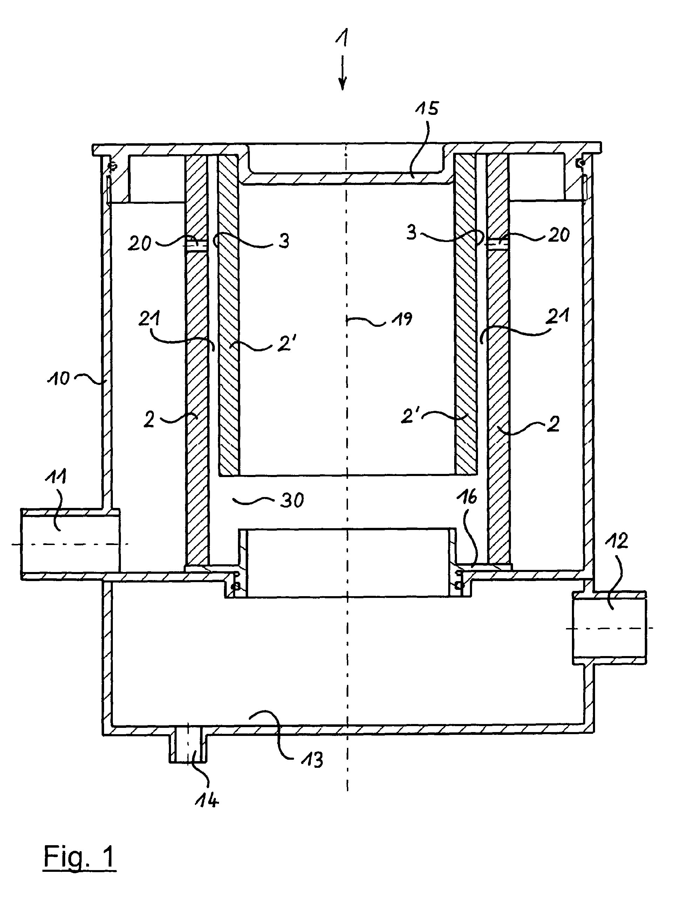

Figur 1 der Zeichnung zeigt einen Ölnebelabscheider 1 in einer ersten Ausführung in einem vertikalen Längsschnitt. Der Ölnebelabscheider 1 weist ein Gehäuse 10 mit einem Rohgaseinlass 11 für von einem Kurbelgehäuse einer zugehörigen Brennkraftmaschine kommendes Kurbelgehäuseentlüftungsgas, einen Reingasauslass 12 für entöltes Kurbelgehäuseentlüftungsgas sowie einen im unteren Bereich des Gehäuses 10 liegenden Ölsammelbereich 13 mit einer Ölableitung 14 für aus dem Kurbelgehäuseentlüftungsgas abgeschiedenes Öl auf.

Im Inneren des Gehäuses 10 ist ein hohlzylindrischer Diffusionsabscheidekörper 2 angeordnet, der in seinem oberen Bereich mehrere über seinen Umfang verteilt angeordnete, durchgehende Gaskanäle 20 aufweist. Im Übrigen besteht der Diffusionsabscheidekörper 2 aus einem Fasermaterial oder Schaummaterial oder Sintermaterial, das für das Kurbelgehäuseentlüftungsgas durchlässig ist und das in dem Kurbelgehäuseentlüftungsgas mitgeführten Ölnebel in Form von feinen Ölpartikel aus dem Gasstrom durch Diffusionsabscheidung abscheidet.

Radial innen ist mit Abstand vom Diffusionsabscheidekörper 2 ein weiterer Diffusionsabscheidekörper 2' angeordnet, der ebenfalls eine hohlzylindrische Form hat, jedoch eine geringere Höhe aufweist als der erste Diffusionsabscheidekörper 2. Beide Diffusionsabscheidekörper 2 und 2' sind konzentrisch zueinander und zu einer Mittelachse 19 des Ölnebelabscheiders 1 angeordnet. Zur Positionierung sind die Diffusionsabscheidekörper 2 und 2' mit einem das Gehäuse 10 oberseitig verschließenden Deckel 15 verbunden, beispielsweise verklebt oder verschweißt. Zwischen dem Innenumfang des ersten Diffusionsabscheidekörpers 2 und dem Außenumfang des zweiten Diffusionsabscheidekörpers 2' ist ein Ringspalt 21 freigehalten.

Der äußere, höhere Diffusionsabscheidekörper 2 steht mit seinem unteren Stirnende auf einer Grundplatte 16 auf und ist mit dieser ebenfalls verbunden, vorzugsweise verklebt oder verschweißt. Der radial innere Diffusionsabscheidekörper 2' endet unten im Abstand von der Grundplatte 16. Die Grundplatte 16 ist in ihrem Zentrum durchbrochen, um einen Strömungsweg für das entölte Kurbelgehäuseentlüftungsgas zu dem Reingasauslass 12 zur Verfügung zu stellen.

Die Diffusionsabscheidekörper 2 und 2' bilden hier zusammen mit dem Deckel 15, optional zusätzlich mit der Grundplatte 16, eine miteinander verbundene Einheit, die ein einfaches Austauschen der Diffusionsabscheidekörper 2 und 2' im Rahmen von Wartungsarbeiten erlaubt.

In einem frischen Zustand sind die Diffusionsabscheidekörper 2 und 2' noch nicht mit Öl und sonstigem im Kurbelgehäuseentlüftungsgas mitgeführten Stoffen beladen, so dass sie einen geringen Strömungswiderstand für das Kurbelgehäuseentlüftungsgas bieten. In diesem Zustand strömt das Kurbelgehäuseentlüftungsgas in weit überwiegendem Anteil und mit geringer Geschwindigkeit durch die Diffusionsabscheidekörper 2 und 2' hindurch, wodurch das mitgeführte Öl aus dem Gas durch Diffusionsabscheidung abgeschieden wird. Der Teilstrom des Gases, der durch die Gaskanäle 20 strömt, durchströmt anschließend den zweiten Diffusionsabscheidekörper 2', wodurch auch dieser Gasteilstrom durch Diffusionsabscheidung wirksam entölt wird.

Innerhalb der Diffusionsabscheidekörper 2 und 2' oder über deren Oberflächen fließt das abgeschiedene Öl unter Schwerkraftwirkung nach unten und gelangt durch die durchbrochene Grundplatte 16 hindurch in den Ölsammelbereich 13, von wo es durch die Ölableitung 14 vorzugsweise zum Kurbelgehäuse der zugehörigen Brennkraftmaschine zurückgeführt wird.

Nach längerer Betriebszeit des Ölnebelabscheiders 1 kommt es zur Ablagerung von Stoffen innerhalb der Diffusionsabscheidekörper 2 und 2', die dort dauerhaft verbleiben und nicht abfließen. Hierdurch erhöht sich der Strömungswiderstand der Abscheidekörper 2 und 2' mit der Zeit. Dies führt dazu, dass ein zunehmend größer werdender Teilstrom des Kurbelgehäuseentlüftungsgases durch die freien Gaskanäle 20 im äußeren Abscheidkörper 2 strömt. Der mit Abstand radial innen von dem ersten Diffusionsabscheidekörper 2 angeordnete zweite Diffusionsabscheidekörper 2' bildet dann mit seinem radial innen von den Gaskanälen 20 liegenden Oberflächenbereichen 3 eine Prallfläche für das durch die Gaskanäle 20 strömende Kurbelgehäuseentlüftungsgas. In den Oberflächenbereichen 3 findet auf diese Weise eine Prallabscheidung von Ölpartikeln aus dem Kurbelgehäuseentlüftungsgas statt. Damit gelingt bei dem Ölnebelabscheider 1 in jedem Zustand der Diffusionsabscheidekörper 2 und 2' eine wirksame Ölnebelabscheidung, wobei zunächst die Ölnebelabscheidung durch Abscheidung des Öls innerhalb der Diffusionsabscheidekörper 2 und 2' durch Diffusionsabscheidung erfolgt; bei zunehmender Beladung der Diffusionsabscheidekörper 2 und 2' nimmt die Gasführung durch die Gaskanäle 20 zu, wobei noch eine Ölabscheidung durch Prallabscheidung in den Oberflächenbereichen 3 erfolgt. Hiermit ist über eine sehr lange Betriebsdauer eine wirksame Ölnebelabscheidung und ausreichende Kurbelgehäuseentlüftung gewährleistet, was Störungen und Schäden an der zugehörigen Brennkraftmaschine vermeidet.

Im frischen Zustand der Diffusionsabscheidekörper 2 und 2' strömt das Kurbelgehäuseentlüftungsgas im Wesentlichen in Radialrichtung von außen nach innen durch die Diffusionsabscheidekörper 2 und 2' und dann aus dem Innenbereich des inneren Diffusionsabscheidekörpers 2' axial nach unten durch die durchbrochene Grundplatte 16 hindurch zum Reingasauslass 12. Bei zunehmender Beladung der Diffusionsabscheidekörper 2 und 2' fließt ein zunehmender Teilstrom des Kurbelgehäuseentlüftungsgases durch die Gaskanäle 20 radial von außen nach innen und dann nach einer scharfen Umlenkung in Axialrichtung nach unten durch den Ringspalt 21. Das von der Grundplatte 16 beabstandete untere Ende des inneren Diffusionsabscheidekörpers 2' bildet hier einen Gasdurchlass für das aus dem Ringspalt 21 kommende, durch Diffusions- und Prallabscheidung entölte Kurbelgehäuseentlüftungsgas, das dann weiter durch die durchbrochene Grundplatte 16 zum Reingasauslass 12 fließen kann.

Damit auch bei stark oder maximal beladenen Diffusionsabscheidekörpern 2 und 2' keine unzulässig hohen Drücke im Kurbelgehäuse der zugehörigen Brennkraftmaschine auftreten, sind der Querschnitt und die Anzahl der Gaskanäle 20 so gewählt, dass auch bei maximal beladenen Diffusionsabscheidekörpern 2 und 2' noch eine ausreichende Ableitung von Kurbelgehäuseentlüftungsgas gewährleistet ist und ein maximal zulässiger Druckabfall über den Ölnebelabscheider 1 nicht überschritten wird. Die Gaskanäle 20 sind aufgrund der darin auftretenden relativ hohen Gasgeschwindigkeiten selbstreinigend, so dass hier auch nach einer langen Betriebszeit keine Verstopfung der Gaskanäle 20 zu befürchten ist.

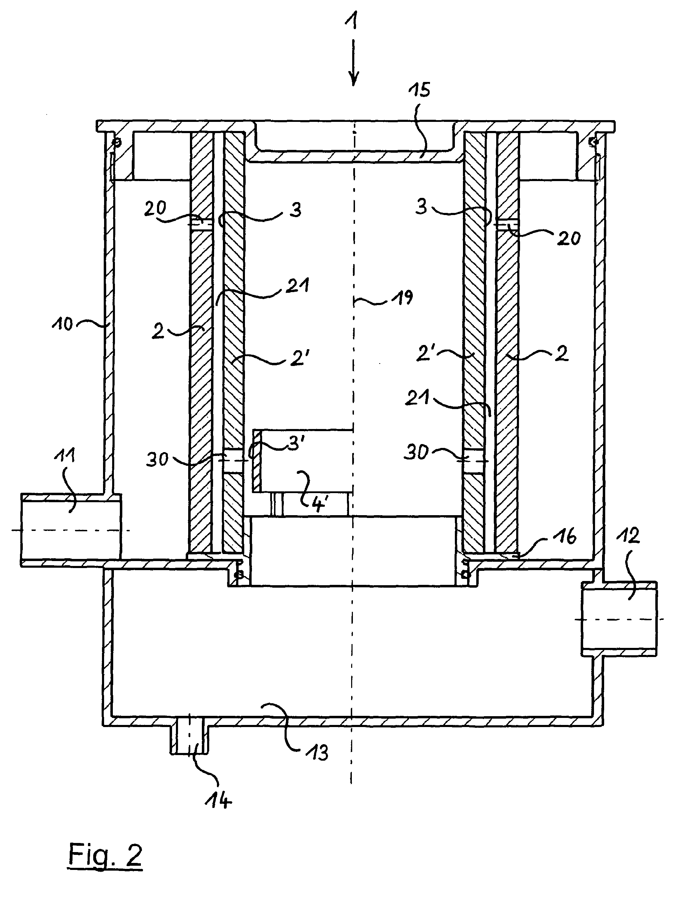

Figur 2 zeigt weitere Ausgestaltungen des Ölnebelabscheiders 1, wobei in der linken und in der rechten Hälfte der Figur 2 zwei verschiedene Ausführungen dargestellt sind. Das Gehäuse 10 mit dem Rohgaseinlass 11, dem Reingasauslass 12, dem Ölsammelbereich 13 und der Ölableitung 14 sowie dem Deckel 15 entspricht dem Beispiel gemäß Figur 1.

Unterschiedlich zu dem Ölnebelabscheider 1 gemäß Figur 1 ist bei dem Beispiel gemäß Figur 2, dass hier der äußere Diffusionsabscheidekörper 2 und der innere Diffusionsabscheidekörper 2' die gleiche axiale Länge oder Höhe aufweisen, so dass beide Diffusionsabscheidekörper 2 und 2' mit ihrem unteren Stirnende gemeinsam auf der Grundplatte 16 stehen. Oberseitig liegen die Stirnenden beider Diffusionsabscheidekörper 2 und 2' an der Unterseite des Deckels 15 an und sind dort, ebenso wie an der Grundplatte 16, angeklebt oder angeschweißt.

Der radial äußere Diffusionsabscheidekörper 2 stimmt bei dem Beispiel gemäß Figur 2 mit dem Beispiel gemäß Figur 1 überein. Der radial innere Abscheidekörper 2' besitzt in seinem unteren Bereich, also mit relativ großem axialen Versatz zu den oben im äußeren Diffusionsabscheidekörper 2 liegenden Gaskanälen 20, einen oder mehrere Gasdurchlässe 30 in Form von hier relativ großen Durchbrechungen. Die Gasdurchlässe 30 erlauben einen widerstandsarmen Gasfluss, so dass der Strömungswiderstand des Ölnebelabscheiders 1 insgesamt vorteilhaft niedrig gehalten wird, auch wenn die Diffusionsabscheidekörper 2 und 2' stark beladen sind.

Wie in der linken Hälfte von Figur 2 angedeutet ist, kann radial innen von dem Gasdurchlass 30 eine weitere Prallabscheidefläche 4' vorgesehen sein. In diesem Beispiel hat die Prallabscheidefläche 4' eine radial äußere Oberfläche 3' einer ringförmigen, hohlzylindrischen Prallplatte als abscheidewirksame Fläche, die hier in Umfangsrichtung in mehrere Abschnitte, insbesondere pro Gasdurchlass 30 einen Abschnitt, unterteilt ist. Über radial federnde, axial verlaufende Verbindungsstege sind die Abschnitte der Prallplatte 4' mit der Grundplatte 16 verbunden ist, um sie in der dargestellten Position zu halten und zugleich eine federnde Bewegung in Radialrichtung zu gestatten. Bei geringem Druckabfall über dem Ölnebelabscheider 1 liegt die Prallabscheidefläche 4' zunächst radial innen an dem inneren Diffusionsabscheidekörper 2' an und verdeckt dann den Gasdurchlass 30.

Auch bei dem Ölnebelabscheider 1 gemäß Figur 2 erfolgt in frischem Zustand der Diffusionsabscheidekörper 2 und 2' die Ölnebelabscheidung ganz überwiegend durch Ablagerung der Ölpartikel in den Diffusionsabscheidekörpern 2 und 2', also durch Diffusionsabscheidung. Bei zunehmendem Beladen der Diffusionsabscheidekörper 2 und 2' während der Betriebszeit des Ölnebelscheiders 1 fließt auch hier ein zunehmend größer werdender Teilvolumenstrom des Kurbelgehäuseentlüftungsgases durch die Gaskanäle 20 im äußeren Diffusionsabscheidekörper 2, wodurch eine Prallabscheidung an der Oberfläche 3, die durch die radial äußere Oberfläche des inneren Diffusionsabscheidekörpers 2' gebildet ist, erfolgt. Durch den inneren Diffusionsabscheidekörper 2' strömt ein erster Teil des Kurbelgehäuseentlüftungsgases radial nach innen und durch den Ringspalt 21 zwischen den beiden Diffusionsabscheidekörpern 2 und 2' strömt ein zweiter Teil des Kurbelgehäuseentlüftungsgases axial nach unten und dann durch den mindestens einen Gasdurchlass 30 radial nach innen, wo ggf. eine weitere Prallabscheidung stattfindet. Schließlich strömt der wieder vereinigte, gesamte Gasstrom weiter axial nach unten durch die durchbrochene Grundplatte 16 und dann zum Reingasauslass 12. In diesem Betriebszustand drückt der Gasstrom aufgrund des höher gewordenen Druckabfalls über dem Ölnebelabscheider 1 die Prallabscheidefläche 4' gegen deren Rückstellkraft von dem Gasdurchlass 30 radial nach innen weg, sodass nun der Gasdurchlass 30 frei ist, wie in der Figur 2 in der linken Hälfte dargestellt.

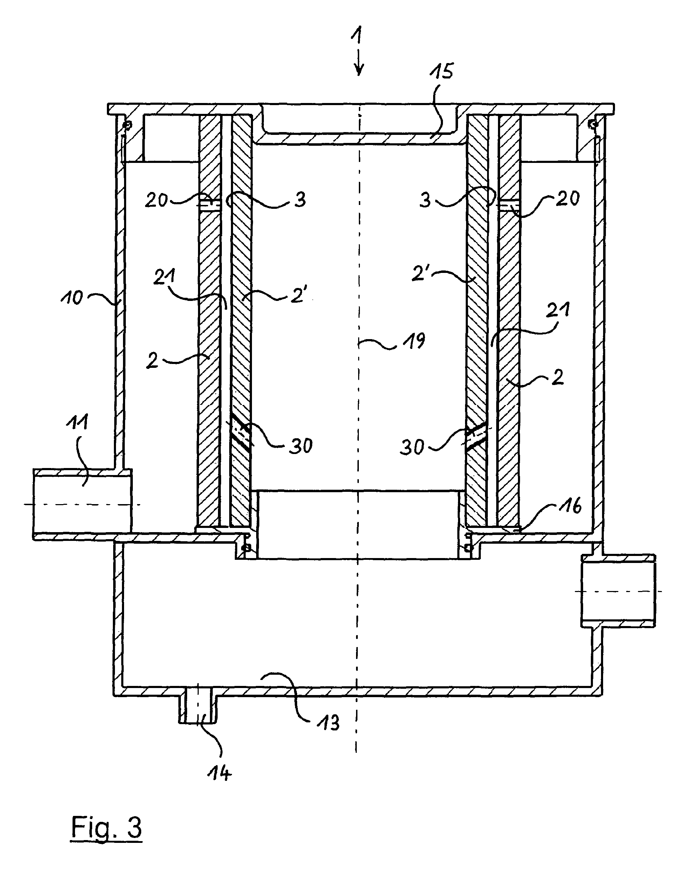

Figur 3 zeigt ein Ausführungsbeispiel des Ölnebelabscheiders 1, das in weiten Teilen mit der in der Figur 2 in deren rechter Hälfte dargestellten Ausführung übereinstimmt. Unterschiedlich ist, dass bei dem Beispiel des Ölnebelabscheiders 1 nach Figur 3 die Gasdurchlässe 30 durch geneigt verlaufende Kanäle gebildet sind, wobei die Kanäle 30 in Radialrichtung von außen nach innen betrachtet schräg nach unten verlaufend ausgeführt sind. Hierdurch werden im Bereich der Gasdurchlässe 30 scharfe Strömungsumlenkungen, die zu einer Erhöhung des Strömungswiderstandes führen würden, vermieden. Ansonsten entspricht das Ausführungsbeispiel des Ölnebelabscheiders 1 gemäß Figur 3 den zuvor beschriebenen Beispielen.

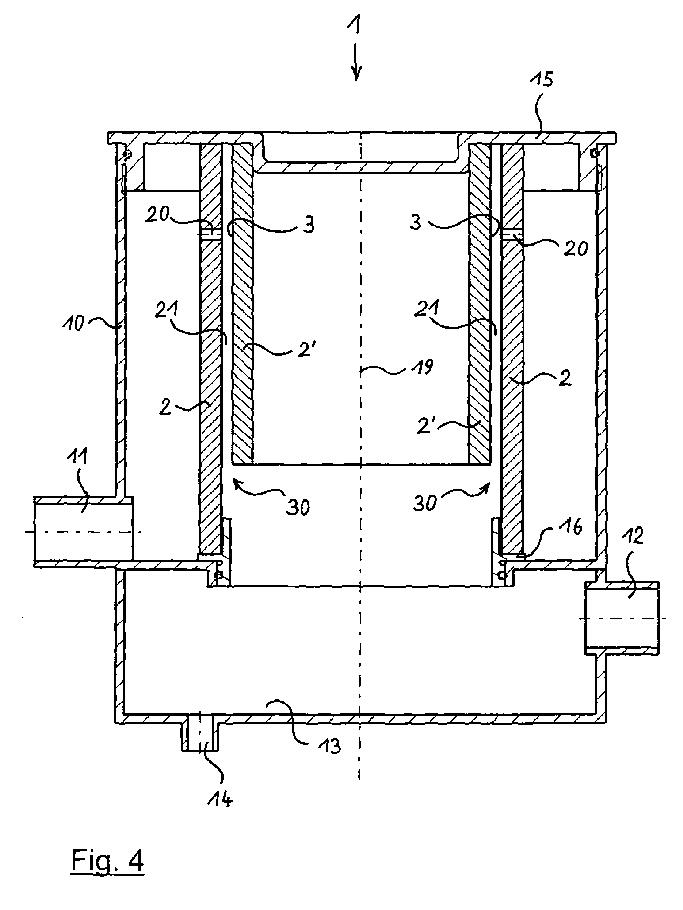

Figur 4 zeigt ein Ausführungsbeispiel des Ölnebelabscheiders 1, das in weiten Teilen dem Ausführungsbeispiel des Ölnebelabscheiders 1 gemäß Figur 1 entspricht. Unterschiedlich ist bei dem Beispiel gemäß Figur 4 gegenüber der Figur 1, dass die Grundplatte 16 anders ausgeführt ist. In dem Beispiel nach Figur 4 hat die Grundplatte eine maximal große zentrale Durchbrechung, wodurch hier ein besonders großer Strömungsquerschnitt für das aus dem inneren Bereich des inneren Diffusionsabscheidekörpers 2' und aus dem Ringspalt 21 abströmende, entölte Kurbelgehäuseentlüftungsgas auf dem Weg zum Reingasauslass 12 zur Verfügung gestellt wird. Hinsichtlich der weiteren Einzelheiten in Figur 4 wird auf die vorhergehende Figurenbeschreibung verwiesen.

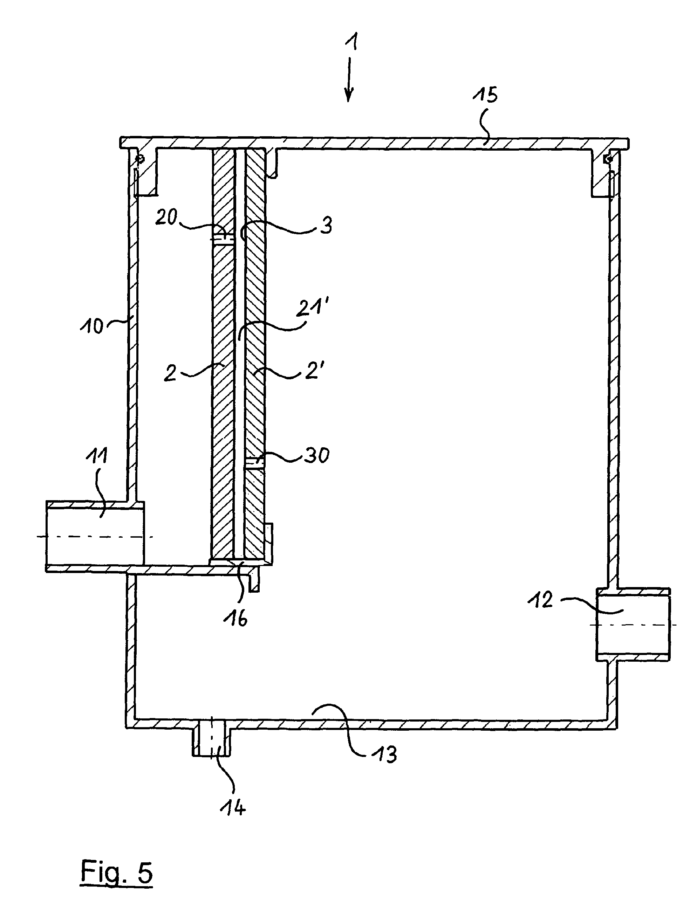

Figur 5 zeigt ein Beispiel des Ölnebelabscheiders 1, bei dem die Diffusionsabscheidekörper 2 und 2' flach und plattenförmig ausgeführt sind. Die beiden Diffusionsabscheidekörper 2 und 2' liegen in zwei parallel zueinander verlaufenden, vertikalen Ebenen unter Freihaltung eines hier flachen, ebenen Spaltraums 21' nebeneinander.

Die beiden Diffusionsabscheidekörper 2 und 2' sind hier ebenfalls in einem Gehäuse 10 angeordnet, in das über den Rohgaseinlass 11 das zu entölende Kurbelgehäuseentlüftungsgas eingeleitet wird. Im frischen Zustand der Diffusionsabscheidekörper 2 und 2' erfolgt die Ölabscheidung ganz oder weit überwiegend innerhalb der Diffusionsabscheidekörper 2 und 2' durch Diffusionsabscheidung. Bei zunehmendem Beladen der Diffusionsabscheidekörper 2 und 2' fließt auch hier ein zunehmend größer werdender Teilstrom des Kurbelgehäuseentlüftungsgases durch die im oberen Bereich des ersten Diffusionsabscheidekörpers 2 vorgesehenen Gaskanäle 20. Die Gaskanäle 20 sind bei dem vorliegenden Beispiel gemäß Figur 5 senkrecht zur Zeichnungsebene hintereinander angeordnet, wodurch in Figur 5 nur ein einziger Gaskanal 20 sichtbar ist. Bei Bedarf können auch mehrere Reihen von Gaskanälen 20 übereinander angeordnet werden. Der die Gaskanäle 20 durchströmende Kurbelgehäuseentlüftungsgasteilstrom trifft auf die Oberfläche 3, die hier durch die dem ersten Diffusionsabscheidekörper 2 zugewandte Oberfläche des zweiten Diffusionsabscheidekörpers 2' gebildet wird. Durch Prallabscheidung wird dieser Kurbelgehäuseentlüftungsgasteilstrom von Öltröpfchen befreit. Das Kurbelgehäuseentlüftungsgas strömt dann teils durch den zweiten Diffusionsabscheidekörper 2' gemäß Figur 5 nach rechts und teils durch den Spaltraum 21' zwischen den Diffusionsabscheidekörpern 2 und 2' nach unten und dann durch den mindestens einen Gasdurchlass 30 im zweiten Diffusionsabscheidekörper 2' ebenfalls nach rechts, von wo aus das nun entölte Kurbelgehäuseentlüftungsgas insgesamt durch den Reingasauslass 12 abströmen kann. Ein unterer Bereich des Gehäuses 1 bildet auch hier einen Ölsammelbereich 13, von wo aus das abgeschiedene Öl durch die Ölableitung 14 abgeführt werden kann.

Zur Halterung und Positionierung der beiden flachen, plattenförmigen Diffusionsabscheidekörper 2, 2' dient auch hier eine Grundplatte 16, auf der die beiden Diffusionsabscheidekörper 2 und 2' mit ihrer Unterkante oder ihrem unteren Rand stehen. Eine weitere Positionierung erfolgt durch den Deckel 15, der an seiner Unterseite mit der Oberkante der beiden Diffusionsabscheidekörper 2 und 2' verbunden ist. Die Diffusionsabscheidekörper 2 und 2' bilden somit zusammen mit dem Deckel 15 auch hier eine miteinander verbundene Einheit, die ein einfaches Austauschen der Diffusionsabscheidekörper 2 und 2' im Rahmen von Wartungsarbeiten erlaubt.

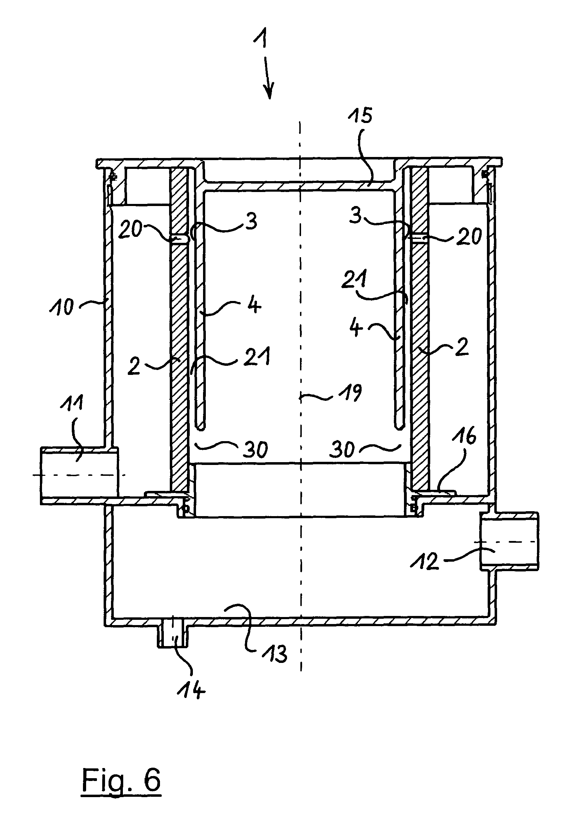

Das in Figur 6 gezeigte Ausführungsbeispiel des Ölnebelabscheiders 1 besitzt im Unterschied zum dem vorhergehend beschriebenen Ausführungsbeispielen nur einen einzigen Diffusionsabscheidekörper 2. Dieser Diffusionsabscheidekörper 2 ist hier wieder, ähnlich wie in den Beispielen gemäß den Figuren 1 bis 4, als Hohlzylinder ausgebildet.

Radial innen vom Diffusionsabscheidekörper 2 ist eine ebenfalls hohlzylindrische Prallabscheidefläche 4 mit einer radial äußeren, abscheidewirksamen Oberfläche 3 angeordnet, die sich, wie der Diffusionsabscheidekörper 2, konzentrisch zu der Mittelachse 19 des Ölnebelabscheiders 1 erstreckt. Die hohlzylindrische Prallabscheidefläche 4 ist hier aus Gründen einer einfachen Fertigung einstückig mit dem Deckel 15 des Gehäuses 10 ausgeführt.

Links in Figur 6 liegt auch hier der Rohgaseinlass 11, durch den zu entölendes Kurbelgehäuseentlüftungsgas dem Ölnebelabscheider 1 zugeführt wird. Im frischen Zustand des Diffusionsabscheidekörpers 2 durchströmt das Kurbelgehäuseentlüftungsgas vollständig oder weit überwiegend den Diffusionsabscheidekörper 2, wodurch innerhalb des Diffusionsabscheidekörpers 2 die mitgeführten Ölpartikel durch Diffusionsabscheidung abgeschieden werden.

Bei einem zunehmenden Beladen des Diffusionsabscheidekörpers 2 strömt auch hier ein zunehmend größer werdender Anteil des Kurbelgehäuseentlüftungsgases durch die Gaskanäle 20, die auch hier im oberen Bereich des Diffusionsabscheidekörpers 2 in Radialrichtung durch diesen hindurch laufen. Die radial äußere Oberfläche 3 der Prallabscheidefläche 4 bildet nun die Fläche, auf die die durch die Gaskanäle 20 fließenden Teilströme des Kurbelgehäuseentlüftungsgases auftreffen, wodurch eine Prallabscheidung von mitgeführten Ölpartikel aus dem Gasstrom bewirkt wird.

Auch hier wird somit erreicht, dass nach einer Ölnebelabscheidung durch Diffusionsabscheidung im Inneren des Diffusionsabscheidekörpers 2 bei dessen zunehmender Beladung mehr und mehr die Gasströmung durch die Gaskanäle fließt, wobei auch dann eine Ölnebelabscheidung, nun durch Prallabscheidung, erfolgt. Damit hat auch der Ölnebelabscheider 1 in seiner Ausführung gemäß Figur 6 eine hohe Wirksamkeit bei langer Lebensdauer.

Sowohl das den Diffusionsabscheidekörper 2 als auch die Gaskanäle 20 durchströmende, danach entölte Kurbelgehäuseentlüftungsgas gelangt durch den Gasdurchlass 30 am unteren Ende der Prallplatte 4 in den radial inneren Bereich des Gehäuses 10 und von dort durch die auch hier durchbrochene Grundplatte 16 zum Reingasauslass 12.

Abgeschiedenes Öl fließt auch hier unter Schwerkraftwirkung in den unten im Gehäuse 10 ausgebildeten Ölsammelbereich 13, von wo aus wieder eine Ölableitung 14 das gesammelte Öl abführt.

Zwecks einer einfachen Wartung des Ölnebelabscheiders 1 ist auch hier der Diffusionsabscheidekörper 2 an seinem oberen Stirnende mit der Unterseite des Deckels 15 verbunden. Das untere Stirnende des Diffusionsabscheidekörpers 2 ist mit der Grundplatte 16 verbunden, wodurch der Diffusionsabscheidekörper 2, der Deckel 15 mit der Prallplatte 4 und die Grundplatte 16 eine austauschbare Einheit bilden.

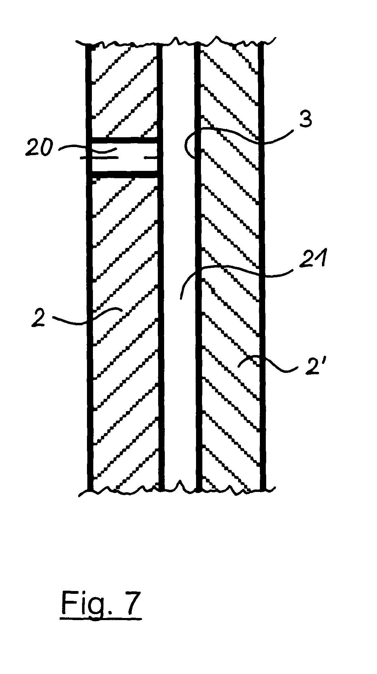

Figur 7 zeigt in vergrößerter Darstellung ein Detail aus einem der Ölnebelabscheider gemäß den Figuren 1 bis 5. Dabei zeigt das Detail gemäß Figur 7 einen Ausschnitt aus den beiden Diffusionsabscheidekörpern 2 und 2' mit einem durch den Diffusionsabscheidekörper 2 verlaufenden Gaskanal 20. In dem Beispiel gemäß Figur 7 ist der Gaskanal 20 unmittelbar in dem Diffusionsabscheidekörper 2 ausgebildet, beispielsweise durch Einschmelzen oder Einschweißen oder Einbohren oder Einstanzen. Bei einem Diffusionsabscheidekörper 2 aus einem thermoplastischen Material ergibt sich bei einem Einschmelzen der Gaskanäle 20 vorteilhaft eine verfestigte Oberfläche der Gaskanäle 20, wodurch diese ohne besondere Maßnahmen eine gute Formbeständigkeit erhalten.

Der in Figur 7 rechts von dem Diffusionsabscheidekörper 2 angeordnete weitere Diffusionsabscheidekörper 2' bildet mit seiner dem ersten Diffusionsabscheidekörper 2 zugewandten Oberfläche 3 im Bereich des Gaskanals 20 die Prallfläche, an der bei zunehmend beladenen Diffusionsabscheidekörpern 2 und 2' die Prallabscheidung von Ölpartikeln stattfindet, die in dem durch den Gaskanal 20 fließenden Gasstrom des Kurbelgehäuseentlüftungsgases mitgeführt werden. Zwischen den beiden Diffusionsabscheidekörpern 2 und 2' liegt der Ringspalt 21.

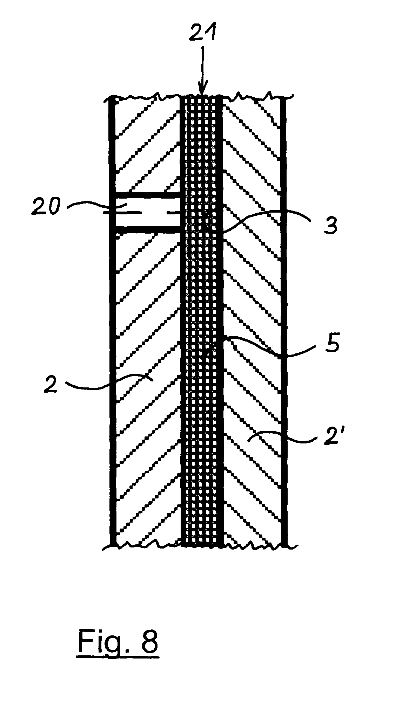

Figur 8 zeigt in gleicher Darstellungsweise wie die Figur 7 eine geänderte Ausführung. Der Unterschied zur Figur 7 besteht darin, dass bei dem Beispiel nach Figur 8 in dem Ringspalt 21 zwischen den beiden Diffusionsabscheidekörpern 2 und 2' ein Stützkörper 5 angeordnet ist. Dieser Stützkörper 5 ist zweckmäßig durch ein dreidimensionales Gitter gebildet, welches den Ringspalt 21 offen hält und eine Deformation der Diffusionsabscheidekörper 2 und 2' im Betrieb vermeidet. Die räumliche Struktur des Stützkörpers 5 ist dabei selbstverständlich so gestaltet, dass ein möglichst widerstandsarmes Durchströmen des Kurbelgehäuseentlüftungsgases entlang des Ringspaltes 21 möglich bleibt. Ergänzend kann der Stützkörper 5 eine Strömungsleitfunktion und/oder Ölabscheidefunktion durch eine entsprechende Formgebung und Struktur aufweisen.

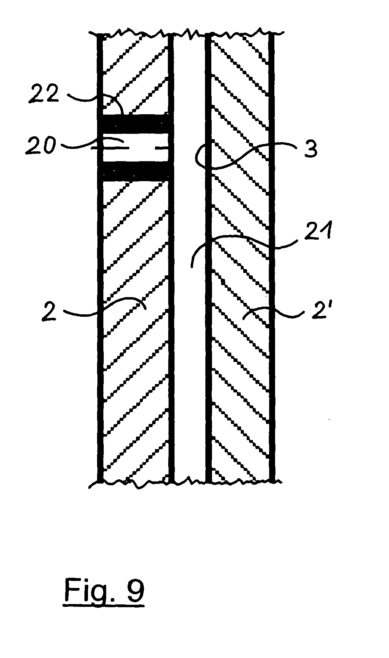

Figur 9 zeigt wieder in gleicher Darstellungsweise wie die Figuren 7 und 8 ein weiteres Ausführungsbeispiel. Für dieses Beispiel ist charakteristisch, dass die Gaskanäle 20 hier durch in den ersten Diffusionsabscheidekörper 2 eingesteckte Hülsen 22 gebildet sind. Auf diese Weise erhalten die Gaskanäle 20 eine dauerhaft beständige Kontur, die zudem mit hoher Genauigkeit herstellbar ist.

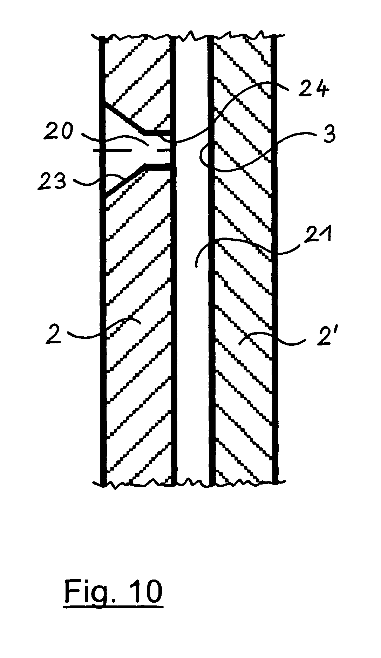

Die Figur 10 zeigt in gleicher Darstellungsweise wie die Figuren 7 bis 9 ein Beispiel, bei dem die Gaskanäle 20 zuströmseitig, das heißt in Figur 10 links, mit einem Einströmtrichter 23 ausgebildet sind. Relativ dazu bildet der in Gasströmungsrichtung nachfolgende, also in Figur 10 rechte Teil des Gaskanals 20 eine Verengung 24, wodurch der Gaskanal 20 düsenartig wirkt. Damit wird einerseits ein turbulenzarmes Einströmen des Kurbelgehäuseentlüftungsgases in den Gaskanal 20 und andererseits bei stark beladenem Diffusionsabscheidekörper 2 eine hohe Gasströmungsgeschwindigkeit im Bereich der Verengung 24 des Gaskanals 20 erreicht, was für eine gute Prallabscheidung bei geringem Strömungswiderstand sorgt.

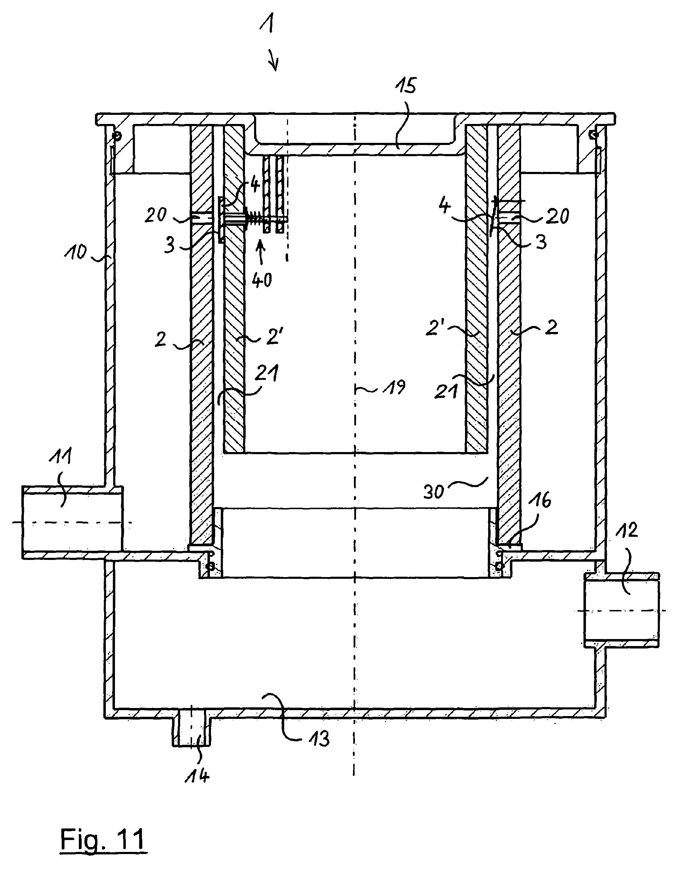

Figur 11 zeigt eine Abwandlung des Ausführungsbeispiels gemäß Figur 1, wobei in der linken Hälfte von Figur 11 eine in einer federnden Lagerung 40 gehaltene Prallabscheidefläche 4 mit einer dem Gaskanal 20 zugewandten Oberfläche 3 dargestellt ist. Bei geringem Druckabfall, also bei frischem Diffusionsabscheidekörper 2, liegt die Oberfläche 3 unter der Wirkung einer Feder der Lagerung 40 an der radial inneren Seite des Diffusionsabscheidekörpers 2 an und verdeckt den Gaskanal 20. Der gesamte Gasstrom durchströmt nun zwangsweise den Diffusionsabscheidekörper 2 und zumindest ein Teilstrom des Gases anschließend den inneren, weiteren Diffusionsabscheidekörper 2'.

Bei zunehmendem Druckabfall, also bei zunehmend beladenem Diffusionsabscheidekörper 2, drückt die steigende Druckdifferenz die Prallabscheidefläche 4 gegen die Federkraft von dem Diffusionsabscheidekörper 2 weg und die Oberfläche 3 erhält den in Figur 11 dargestellten Abstand von dem Diffusionsabscheidekörper 2. Nun ist der Gaskanal 20 frei und es erfolgt eine ausreichende Kurbelgehäuseentlüftung mit Entölung des Gases durch Diffusionsabscheidung im zweiten Diffusionsabscheidekörper 2' und durch Prallabscheidung an der Oberfläche 3.

Wie rechts in Figur 11 dargestellt ist, kann alternativ die Prallabscheidefläche 4 als Blattventil aus einem flexiblen Metallplättchen oder Vliesplättchen oder Elastomerplättchen, jeweils in Schließrichtung mit einer Feder belastet oder mit einer Eigenrückstellkraft ausgestattet, ausgeführt sein. Gezeigt ist das Blattventil in seiner offenen Stellung. Die abscheidewirksame Oberfläche 3 ist hier die dem Diffusionsabscheidekörper 2 zugewandte Oberfläche des Plättchens.

Hinsichtlich der weiteren Teile in Figur 11 wird auf die Beschreibung der Figur 1 verwiesen.

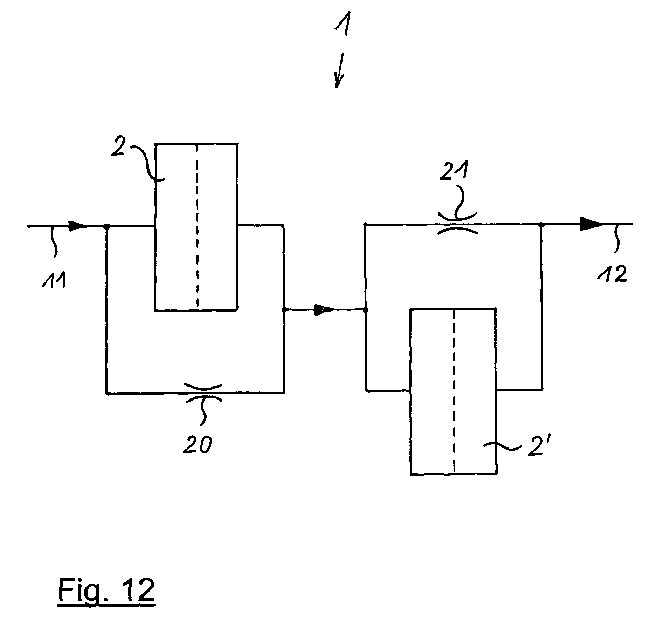

In Figur 12 ist ein schematisches Schaltbild des Ölnebelabscheiders 1 gemäß Figur 1 gezeigt. Links ist der Rohgaseinlass 11, durch den mit Ölnebel befrachtetes Kurbelgehäuseentlüftungsgas zugeführt wird. Der Gasstrom durchströmt parallel den Diffusionsabscheidekörper 2 und die freien Gaskanäle 20, wobei letztere wie eine Drossel wirken. Das Verhältnis der Teilströme stellt sich entsprechend dem Verhältnis der Durchflusswiderstände zwischen dem Abscheidekörper 2 und den freien Gaskanälen 20 ein. Bei einem frischen, unbeladenen Abscheidekörper 2 strömt der weitaus größte Teil des Gases durch den Abscheidekörper 2; bei zunehmender Beladung des Abscheidekörpers 2 strömt ein zunehmender Teil des Gases durch die freien Gaskanäle 20, so dass immer eine Gasströmung gewährleistet bleibt. In Strömungsrichtung hinter dem Diffusionsabscheidekörper 2 und den Gaskanälen 20 werden die beiden Gasteilströme wieder zusammengeführt und gelangen dann zu der Parallelschaltung aus zweitem Diffusionsabscheidekörper 2' und dem Ringspalt 21, der ebenfalls funktional als Drossel wirkt. Auch hier stellt sich das Verhältnis der Teilströme zwischen dem Abscheidekörper 2' und dem Ringspalt 21 entsprechend deren Strömungswiderständen ein. Bei einem frischen, unbeladenen Abscheidekörper 2' strömt der weitaus größere Teilstrom durch diesen Abscheidekörper 2' ; bei zunehmender Beladung auch dieses zweiten Abscheidekörpers 2' fließt ein zunehmender Teilstrom des Kurbelgehäuseentlüftungsgases durch den als Drossel wirkenden Ringspalt 21. Stromab von dem zweiten Abscheidekörper 2' und dem Ringspalt 21 wird der Kurbelgehäuseentlüftungsgasstrom wieder vereinigt und gelangt nun entölt in den Reingasauslass 12. Auch bei stark oder maximal beladenen Abscheidekörpern 2 und 2' verbleibt ein ausreichend großer Strömungsquerschnitt durch die Gaskanäle 20 und den Ringspalt 21, so dass stets eine ausreichende Kurbelgehäuseentlüftung gewährleistet ist. Ein unzulässig hoher Druck im Kurbelgehäuse wird so sicher vermieden.

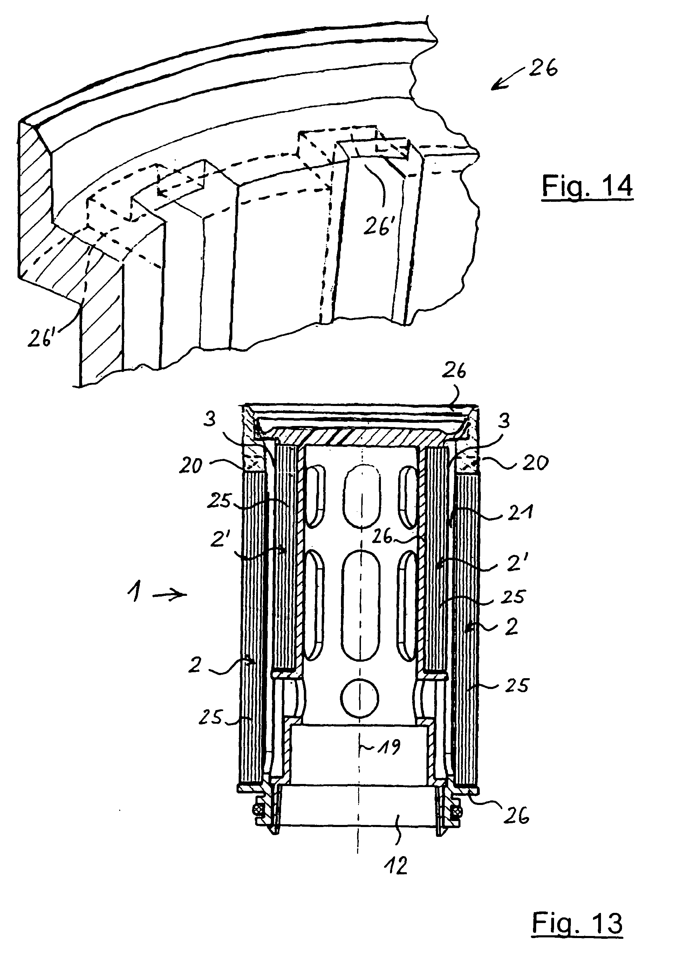

Figur 13 zeigt ein Beispiel eines Ölnebelabscheiders 1, der wieder zwei konzentrisch zueinander angeordnete, hohlzylindrische Diffusionsabscheidekörper 2 und 2' aufweist. Die Abscheidekörper 2 und 2' sind jeweils durch einen Faserkörper 25 gebildet, wobei die Faserkörper 25 von einem Tragkörper 26, der hier mehrteilig ausgeführt ist, getragen werden. Das Rohgas strömt hier von radial außen zu und durchströmt zunächst den äußeren Diffusionsabscheidekörper 2 und anschließend den inneren Diffusionsabscheidekörper 2' .

Die freien Gaskanäle 20 sind hier in einem Übergangsbereich vom oberen Stirnende des äußeren Abscheidekörpers 2 zu einer dieser zugewandten Seite des oberen Teils des Tragkörpers 26 ausgebildet.

Figur 14 zeigt in einem vergrößerten Ausschnitt aus dem oberen Teil des Tragkörpers 26 dessen Gestaltung. Hier wird ersichtlich, dass in dem Tragkörper 26 in Radialrichtung verlaufende offene Nuten 26' ausgebildet sind, die in Umfangsrichtung und nach oben durch das Material des Tragkörpers 26 begrenzt werden und die nach axial unten hin zunächst offen sind. Nach Verbindung des Faserkörpers 25 mit dem Tragkörper 26 werden die Nuten 26' nach unten hin durch das obere Stirnende des Faserkörpers begrenzt, wodurch sich die gewünschten freien Gaskanäle 20 ausbilden.

Die Funktionsweise des Ölnebelabscheiders 1 gemäß Figur 13 entspricht der des Ausführungsbeispiels gemäß Figur 1. Hinsichtlich der weiteren Teile in Figur 13 wird deshalb auf die Beschreibung der Figur 1 verwiesen.

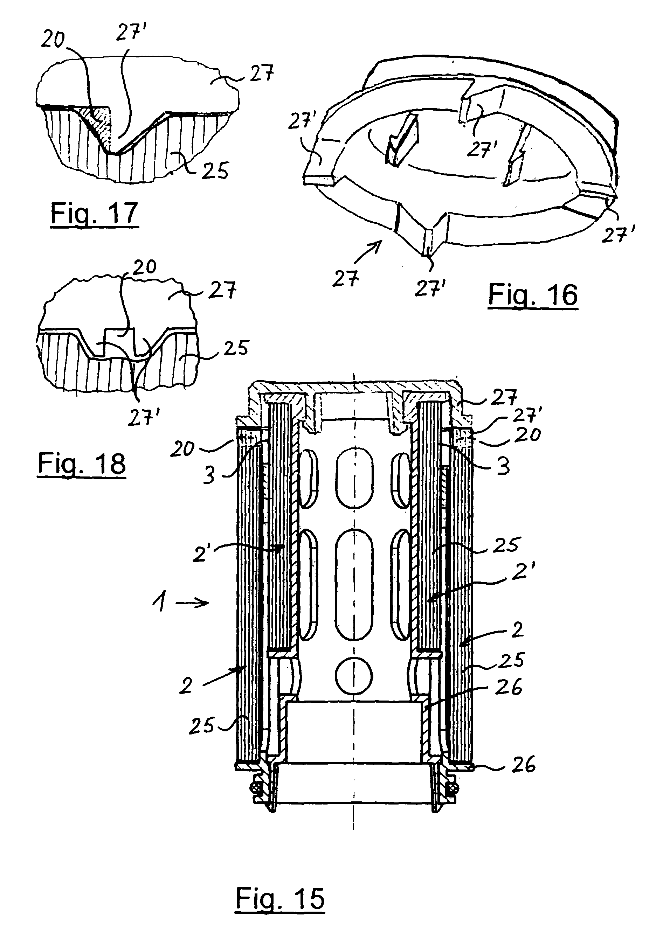

Die Figur 15 zeigt ebenfalls in einem Längsschnitt eine weitere Ausführung des Ölnebelabscheiders 1, der in weiteren Teilen mit dem Ölnebelabscheider 1 gemäß Figur 13 übereinstimmt. Unterschiedlich ist die Art und Weise, wie bei dem Ölnebelabscheider 1 gemäß Figur 15 die freien Gaskanäle 20 ausgebildet sind.

Bei dem Ölnebelabscheider gemäß Figur 15 ist der Tragkörper 26 mehrteilig ausgebildet mit einem oberen, zunächst separaten Tragkörperteil 27, der mit dem übrigen Tragkörper 26 verbindbar, hier verrastbar, ist.

Der Tragkörperteil 27 besitzt an seiner dem oberen Stirnende des Faserkörpers 25 des äußeren Diffusionsabscheidekörper 2 zugewandten Seite in Umfangsrichtung verteilt mehrere in Axialrichtung nach unten vorspringende Stollen 27' oder Nasen oder dergleichen geeignete Vorsprünge. Diese Stollen 27 sorgen dafür, dass bei dem Anbringen des Tragkörperteils 27 das Material des Faserkörpers 25 in Axialrichtung parziell gestaucht wird. Da die Stollen 27' gemäß Figur 16 an einer Seite sehr steil, d. h. mit einer annähert rechtwinklig zur Stirnfläche des Tragkörperteils 27 verlaufenden Steigung ausgeführt sind, kann das Material des Faserkörpers 25 dieser Steigung nicht folgen, wodurch die gewünschten freien Gaskanäle 20 ausgebildet werden.

Dieser Effekt ist in der Figur 17 in einem vergrößerten Detail dargestellt. Oben in der Figur 17 ist ein Ausschnitt des Tragkörperteils 27 zu sehen, von dem einer der Stollen 27' nach unten abragt. Der Stollen 27' drückt in Axialrichtung in den Faserkörper 25, der dem Stollen 27' nicht konturgenau folgen kann, wodurch links von der linken Flanke des Stollens 27' ein im Querschnitt etwa dreieckiger freier Querschnitt als Gaskanal 20 freigemacht und freigehalten wird.

Figur 18 zeigt eine Abwandlung des Tragkörperteils 27 aus Figur 16. In Figur 18 sind anstelle einzelner Stollen 27' jeweils Paare aus zwei Stollen 27' vorgesehen, die spiegelsymmetrisch zueinander ausgeführt sind, wobei die steilen Flanken der Stollen 27' einander zugewandt sind. Auf diese Weise werden jeweils im Querschnitt etwa rechteckige oder quadratische Gaskanäle 20 beim Anbringen des Tragkörperteils 27 am übrigen Tragkörper 26 freigemacht und freigehalten.

**Bezugszeichenliste:**

| Zeichen | Bezeichnung |
|---|---|
| 1 | Ölnebelabscheider |
| 10 | Gehäuse |
| 11 | Rohgaseinlass |
| 12 | Reingasauslass |
| 13 | Ölsammelbereich |
| 14 | Ölableitung |
| 15 | Gehäusedeckel |
| 16 | Grundplatte |
| 19 | Mittelachse |
| 2, 2' | Diffusionsabscheidekörper |
| 20 | Gaskanäle |
| 21 | Ringspalt |
| 21' | Spaltraum |
| 22 | Hülsen |
| 23 | Einströmtrichter |
| 24 | Verengung |
| 25 | Faserkörper |
| 26 | Tragkörper |
| 26' | Nuten |
| 27 | Tragkörperteil |
| 27' | Stollen |
| 3, 3' | Oberflächen |
| 30 | Gasdurchlass |
| 4, 4' | Prallabscheideflächen |
| 40 | federnde Lagerung |
| 41 | Ventil |
| 5 | Stützkörper |

## Patentansprüche

1. Ölnebelabscheider (1) einer Brennkraftmaschine, mit mindestens einem von dem Kurbelgehäuseentlüftungsgas der Brennkraftmaschine durchströmbaren gasdurchlässigen Diffusionsabscheidekörper (2), in welchem in dem Kurbelgehäuseentlüftungsgas enthaltener Ölnebel aus dem Gas abscheidbar ist,
**dadurch gekennzeichnet,**
**dass** in dem/jedem Diffusionsabscheidekörper (2) zusätzlich durchgehende freie Gaskanäle (20) ausgebildet sind und dass in Strömungsrichtung des Kurbelgehäuseentlüftungsgases gesehen hinter den Gaskanälen (20) mit Abstand zu dem/jedem Diffusionsabscheidekörper (2) wenigstens ein weiterer Diffusionsabscheidekörper (2') oder eine Prallabscheidefläche (4) angeordnet ist.

2. Ölnebelabscheider nach Anspruch 1, **dadurch gekennzeichnet, dass** die Gaskanäle (20) senkrecht zu einer Flächenebene des Diffusionsabscheidekörpers (2) verlaufen und dass der weitere Diffusionsabscheidekörper (2') oder die Prallabscheidefläche (4) parallel zur Flächenebene des Diffusionsabscheidekörpers (2) verläuft.

3. Ölnebelabscheider nach Anspruch 1 oder 2, **dadurch gekennzeichnet, dass** der weitere Diffusionsabscheidekörper (2') oder die Prallabscheidefläche (4) zu den Gaskanälen (20) des Diffusionsabscheidekörpers (2) versetzt wenigstens einen Gasdurchlass (30) aufweist.

4. Ölnebelabscheider nach Anspruch 3, **dadurch gekennzeichnet, dass** in Strömungsrichtung des Kurbelgehäuseentlüftungsgases gesehen hinter dem Gasdurchlass (30) mit Abstand zu diesem wenigstens ein weiterer Diffusionsabscheidekörper (2") oder eine weitere Prallabscheidefläche (4') angeordnet ist.

5. Ölnebelabscheider nach einem der Ansprüche 1 bis 4, **dadurch gekennzeichnet, dass** die Prallabscheidefläche (4) oder mindestens eine der Prallabscheideflächen (4, 4') durch eine geschlossene, gas- und öldichte Prallplatte gebildet ist.

6. Ölnebelabscheider nach einem der Ansprüche 1 bis 5, **dadurch gekennzeichnet, dass** der Diffusionsabscheidekörper (2) oder die Diffusionsabscheidekörper (2, 2') und die Prallabscheidefläche (4) oder -flächen (4, 4') jeweils eine hohlzylindrische Form haben und konzentrisch zueinander um eine Mittelachse (19) angeordnet sind.

7. Ölnebelabscheider nach einem der Ansprüche 1 bis 5, **dadurch gekennzeichnet, dass** der Diffusionsabscheidekörper (2) oder die Diffusionsabscheidekörper (2, 2') und die Prallabscheidefläche (4) oder -flächen (4, 4') jeweils im Querschnitt gesehen spiralförmig angeordnet sind.

8. Ölnebelabscheider nach einem der Ansprüche 1 bis 6, **dadurch gekennzeichnet, dass** der Diffusionsabscheidekörper (2) oder die Diffusionsabscheidekörper (2, 2') und die Prallplatte (4) oder die Prallplatten (4, 4') eine flache ebene Form haben und parallel zueinander angeordnet sind.

9. Ölnebelabscheider nach einem der Ansprüche 1 bis 8, **dadurch gekennzeichnet, dass** zwischen den Diffusionsabscheidekörpern (2, 2') oder zwischen dem Diffusionsabscheidekörper (2, 2') und der nachgeordneten Prallabscheidefläche (4) wenigstens ein gas- und öldurchlässiger Stützkörper (5) angeordnet ist.

10. Ölnebelabscheider nach Anspruch 9, **dadurch gekennzeichnet, dass** der Stützkörper (5) durch ein dreidimensionales Gitter gebildet ist.

11. Ölnebelabscheider nach Anspruch 9 oder 10, **dadurch gekennzeichnet, dass** der Stützkörper (5) eine Form und/oder Struktur hat, die für das den Stützkörper (5) durchströmende Gas eine Gasleitfunktion und/oder für den in dem den Stützkörper (5) durchströmenden Gas enthaltenen Ölnebel eine Abscheidefunktion hat.

12. Ölnebelabscheider nach einem der Ansprüche 1 bis 11, **dadurch gekennzeichnet, dass** der oder jeder Diffusionsabscheidekörper (2, 2') mindestens einen Faser- oder Schaumkörper (25) aufweist.

13. Ölnebelabscheider nach Anspruch 12, **dadurch gekennzeichnet, dass** ein den Faser- oder Schaumkörper (25) bildendes Material in einem Ausgangszustand bahnförmig ist und eine geringere Dicke als der Faser- oder Schaumkörper (25) aufweist und dass das bahnförmige Material zu dem Faser- oder Schaumkörper (25) gewickelt ist.

14. Ölnebelabscheider nach Anspruch 12 und nach Anspruch 9 oder 10, **dadurch gekennzeichnet, dass** ein den Faser- oder Schaumkörper (25) bildendes Material in einem Ausgangszustand bahnförmig ist und eine der Dicke des Faser- oder Schaumkörpers (25) entsprechende Dicke aufweist und dass das bahnförmige Material zusammen mit dem in einem Ausgangszustand ebenfalls bahnförmigen Stützkörper in Spiralform zu dem Faser- oder Schaumkörper (25) oder zu mehreren Faser- oder Schaumkörpern (25) gewickelt ist.

15. Ölnebelabscheider nach Anspruch 12, **dadurch gekennzeichnet, dass** der/jeder Faser- oder Schaumkörper (25) die Form eines Hohlprofils, vorzugsweise eines Hohlzylinders, hat.

16. Ölnebelabscheider nach einem der Ansprüche 12 bis 14, **dadurch gekennzeichnet, dass** der oder jeder Diffusionsabscheidekörper (2, 2') neben dem mindestens einen Faser- oder Schaumkörper (25) einen den/die Faser- oder Schaumkörper (25) tragenden Tragkörper (26) aufweist.

17. Ölnebelabscheider nach einem der Ansprüche 12 bis 16, **dadurch gekennzeichnet, dass** der oder jeder Faserkörper (25) aus einem Filzmaterial aus thermo- oder duroplastischen Kunststofffasern oder Metallfasern oder Karbonfasern oder Glasfasern oder aus einem Papiermaterial hergestellt ist.

18. Ölnebelabscheider nach einem der Ansprüche 12 bis 16, **dadurch gekennzeichnet, dass** der Faserkörper (25) aus einem Vlies oder Gewebe oder Gelege oder Gewirk oder Gestrick aus thermo- oder duroplastischen Kunststofffasern oder Metallfasern oder Karbonfasern oder Glasfasern hergestellt ist.

19. Ölnebelabscheider nach Anspruch 12, **dadurch gekennzeichnet, dass** der Schaumkörper aus einem Kunststoff- oder Metall- oder Glasschaum hergestellt ist.

20. Ölnebelabscheider nach Anspruch 19, **dadurch gekennzeichnet, dass** der Schaumkörper aus einem offenzelligen thermo- oder duroplastischen Schaumkunststoff hergestellt ist.

21. Ölnebelabscheider nach einem der Ansprüche 1 bis 11, **dadurch gekennzeichnet, dass** der oder jeder Diffusionsabscheidekörper (2, 2') mindestens einen Sinterkörper aufweist.

22. Ölnebelabscheider nach einem der Ansprüche 1 bis 21, **dadurch gekennzeichnet, dass** die Gaskanäle (20) unmittelbar in das Material des Faserkörpers (25) oder Schaumkörpers oder Sinterkörpers eingeschmolzen oder eingeschweißt oder eingebohrt oder eingestanzt oder eingestochen oder eingeschnitten sind.

23. Ölnebelabscheider nach einem der Ansprüche 1 bis 21, **dadurch gekennzeichnet, dass** die Gaskanäle (20) durch in das Material des Faserkörpers (25) oder Schaumkörpers oder Sinterkörpers eingesteckte Hülsen (22) gebildet sind.

24. Ölnebelabscheider nach einem der Ansprüche 1 bis 21, **dadurch gekennzeichnet, dass** die Gaskanäle (20) in einem Übergangsbereich zwischen mindestens einem Stirnende oder Rand des Faserkörpers (25) oder Schaumkörpers oder Sinterkörpers und einem diesem benachbarten Bereich des zugehörigen Tragkörpers (26) angeordnet sind.

25. Ölnebelabscheider nach Anspruch 24, **dadurch gekennzeichnet, dass** der Tragkörper (26) an seiner dem Faserkörper (25) oder Schaumkörper oder Sinterkörper zugewandten Seite zu diesem hin offene Nuten (26') aufweist, die durch das Stirnende oder den Rand des Faserkörpers (25) oder Schaumkörpers oder Sinterkörpers zu den Gaskanälen (20) begrenzt sind.

26. Ölnebelabscheider nach Anspruch 24, **dadurch gekennzeichnet, dass** der Tragkörper (26) zwei- oder mehrteilig ist und dass ein Tragkörperteil (27) an seiner dem Stirnende oder Rand des Faserkörpers (25) oder Schaumkörpers oder Sinterkörpers zugewandten Seite einen oder mehrere vorspringende Stollen (27') oder Paare von Stollen (27') besitzt, die im verbundenen Zustand der Tragkörperteile (26, 27) den Faserkörper (25) oder Schaumkörper oder Sinterkörper randseitig partiell eindrücken und so die Gaskanäle (20) bilden.

27. Ölnebelabscheider nach einem der Ansprüche 1 bis 26, **dadurch gekennzeichnet, dass** die Gaskanäle (20) ausgangsseitig mit einer düsenartigen Verengung (24) ausgebildet sind.

28. Ölnebelabscheider nach einem der Ansprüche 1 bis 27, **dadurch gekennzeichnet, dass** der weitere Diffusionsabscheidekörper (2') oder der noch weitere Diffusionsabscheidekörper (2") oder die Prallabscheidefläche (4) oder mindestens eine der Prallabscheideflächen (4, 4') oder jeweils ein Teil davon relativ zu den Gaskanälen (20) oder zu dem Gasdurchlass (30) gegen eine Rückstellkraft so verstellbar ist, dass bei einem Differenzdruck über dem Ölnebelabscheider (1) unterhalb eines vorgebbaren Grenzwertes die Gaskanäle (20) und der Gasdurchlass (30) durch den weiteren Diffusionsabscheidekörper (2') oder den noch weiteren Diffusionsabscheidekörper (2") oder die Prallabscheidefläche (4) verschlossen sind, und dass bei einem Differenzdruck über dem Ölnebelabscheider (1) oberhalb eines vorgebbaren Grenzwertes die Gaskanäle (20) und der Gasdurchlass (30) durch Verschieben des weiteren Diffusionsabscheidekörpers (2') oder des noch weiteren Diffusionsabscheidekörpers (2") oder der Prallabscheidefläche(n) (4, 4') gegen die Rückstellkraft geöffnet sind.

29. Ölnebelabscheider nach einem der Ansprüche 1 bis 27, **dadurch gekennzeichnet, dass** den Gaskanälen (20) oder dem Gasdurchlass (30) mindestens ein gesondertes Ventil (41) zugeordnet ist.

30. Ölnebelabscheider nach einem der Ansprüche 1 bis 29 **dadurch gekennzeichnet, dass** der Ölnebelabscheider (1) ein Gehäuse aufweist, das im Betrieb mit einem abnehmbaren Gehäusedeckel (15) verschlossen ist, und dass der oder die Diffusionsabscheidekörper (2, 2', 2") eine austauschbare Baueinheit bilden.

## Claims

1. An oil mist separator (1) of an internal combustion engine, comprising at least one gas-permeable diffusion separation body (2), through which the crankcase ventilation gas of the internal combustion engine can flow and in which oil mist present in the crankcase ventilation gas can be separated from the gas,
**characterised in**
**that** continuous free gas channels (20) are additionally formed in the/each diffusion separation body (2), and that, viewed in flow direction of the crankcase ventilation gas, at least one further diffusion separation body (2') or an impingement separation surface (4) is arranged downstream from the gas channels (20) at a distance from the/each diffusion separation body (2).

2. The oil mist separator according to claim 1, **characterised in that** the gas channels (20) run vertically to a surface plane of the diffusion separation body (2) and that the further diffusion separation body (2) or the impingement separation surface (4) runs parallel to the surface plane of the diffusion separation body (2).

3. The oil mist separator according to claim 1 or 2, **characterised in that** the further diffusion separation body (2') or the impingement separation surface (4) encompasses at least one gas passage (30) offset to the gas channels (20) of the diffusion separation body (2).

4. The oil mist separator according to claim 3, **characterised in that**, viewed in flow direction of the crankcase ventilation gas, at least a further diffusion separation body (2") or a further impingement separation surface (4') is arranged at a distance from the latter downstream from the gas passage (30).

5. The oil mist separator according to any one of claims 1 to 4, **characterised in that** the impingement separation surface (4) or at least one of the impingement separation surfaces (4, 4') is formed by means of a closed, gas-tight and oil-tight impingement plate.

6. The oil mist separator according to any one of claims 1 to 5, **characterised in that** the diffusion separation body (2) or the diffusion separation bodies (2, 2') and the impingement separation surface (4) or surfaces (4, 4') in each case have a hollow-cylindrical form and are arranged concentrically to one another about a centre axis (19).

7. The oil mist separator according to one of claims 1 to 5, **characterised in that**, in each case viewed in cross section, the diffusion separation body (2) or the diffusion separation bodies (2, 2') and the impingement separation surface (4) or surfaces (4, 4') are arranged in a spiralled manned.

8. The oil mist separator according to any one of claims 1 to 6, **characterised in that** the diffusion separation body (2) or the diffusion separation bodies (2, 2') and the impingement plate (4) or the impingement plates (4, 4') have a flat even form and are arranged parallel to one another.

9. The oil mist separator according to any one of claims 1 to 8, **characterised in that** at least one gas-permeable and oil-permeable support body (5) is arranged between the diffusion separation bodies (2, 2') or between the diffusion separation body (2, 2') and the impingement separation surface (4), which is arranged downstream.

10. The oil mist separator according to claim 9, **characterised in that** the support body (5) is formed by means of a three-dimensional grid.

11. The oil mist separator according to claim 9 or 10, **characterised in that** the support body (5) has a form and/or structure, which has a gas-guiding function for the gas, which flows through the support body (5), and/or a separating function for the oil mist contained in the gas, which flows through the support body (5).

12. The oil mist separator according to any one of claims 1 to 11, **characterised in that** the or each diffusion separation body (2, 2') encompasses at least one fibre or foam body (25).

13. The oil mist separator according to claim 12, **characterised in that**, in an initial state, a material, which forms the fibre or foam body (25), is web-shaped and encompasses a smaller thickness than the fibre or foam body (25) and that the web-shaped material is wound to form the fibre or foam body (25).

14. The oil mist separator according to claim 12 and according to claim 9 or 10, **characterised in that**, in an initial state, a material, which forms the fibre or foam body (25) is web-shaped, and encompasses a thickness, which corresponds to the thickness of the fibre or foam body (25), and that the web-shaped material, together with the support body, which is also web-shaped in an initial state, is wound in a spiralled manner to form the fibre or foam body (25) or a plurality of fibre or foam bodies (25).

15. The oil mist separator according to claim 12, **characterised in that** the/each fibre or foam body (25) has the form of a hollow profile, preferably of a hollow cylinder.

16. The oil mist separator according to any one of claims 12 to 14, **characterised in that**, in addition to the at least one fibre or foam body (25), the or each diffusion separation body (2, 2') encompasses a support body (26), which supports the fibre or foam body/bodies (25).

17. The oil mist separator according to any one of claims 12 to 16, **characterised in that** the or each fibre body (25) is made of a felt material of thermoplastic or duroplastic plastic fibres or metal fibres or carbon fibres or glass fibres or of a paper material.

18. The oil mist separator according to any one of claims 12 to 16, **characterised in that** the fibre body (25) is made of a non-woven or woven or non-crimp or interwoven or knitted fabric made of thermoplastic or duroplastic plastic fibres or metal fibres or carbon fibres or glass fibres.

19. The oil mist separator according to claim 12, **characterised in that** the foam body is made of a plastic or metal or glass foam.

20. The oil mist separator according to claim 19, **characterised in that** the foam body is made of an open-celled thermoplastic or duroplastic foam plastic.

21. The oil mist separator according to any one of claims 1 to 11, **characterised in that** the or each diffusion separation body (2, 2') encompasses at least one sintered body.

22. The oil mist separator according to any one of claims 1 to 21, **characterised in that** the gas channels (20) are melted or welded or drilled or stamped or pierced or cut directly into the material of the fibre body (25) or foam body or sintered body.

23. The oil mist separator according to any one of claims 1 to 21, **characterised in that** the gas channels (20) are formed by means of sleeves (22), which are inserted into the material of the fibre body (25) or foam body or sintered body.

24. The oil mist separator according to any one of claims 1 to 21, **characterised in that** the gas channels (20) are arranged in a transition area between at least one end face or edge of the fibre body (25) or foam body or sintered body and an area of the corresponding support body (26) adjacent thereto.

25. The oil mist separator according to claim 24, **characterised in that**, on its side facing the fibre body (25) or foam body or sintered body, the support body (26) encompasses grooves (26'), which are open towards said fibre body (25) and which are delimited to the gas channels (20) by the end face or the edge of the fibre body (25) or foam body or sintered body.

26. The oil mist separator according to claim 24, **characterised in that** the support body (26) has two parts or multiple parts and that, on its side facing the end face or edge of the fibre body (25) or foam body or sintered body, a support body part (27) has one or a plurality of protruding ducts (27') or pairs of ducts (27'), which, in the connected state of the support body parts (26, 27), partially push in the fibre body (25) or foam body or sintered body on the edge side and thus form the gas channels (20).

27. The oil mist separator according to any one of claims 1 to 26, **characterised in that** the gas channels (20) are embodied with a nozzle-like restriction (24) on the output side.

28. The oil mist separator according to any one of claims 1 to 27, **characterised in that** the further diffusion separation body (2') or the still further diffusion separation body (2") or the impingement separation surface (4) or at least one of the impingement separation surfaces (4, 4') or in each case a part thereof can be adjusted relative to the gas channels (20) or to the gas passage (30) against a rest force such that the gas channels (20) and the gas passage (30) are closed by means of the further diffusion separation body (2') or the still further diffusion separation body (2") or the impingement separation surface (4) in response to a pressure differential below a predeterminable threshold value above the oil mist separator (1), and that the gas channels (20) and the gas passage (30) are open by displacing the further diffusion separation body (2') or the still further diffusion separation body (2") or the impingement separation surface(s) (4, 4') against the rest force in response to a pressure differential above a predeterminable threshold value above the oil mist separator (1).

29. The oil mist separator according to any one of claims 1 to 27, **characterised in that** at least one separate valve (41) is assigned to the gas channels (20).

30. The oil mist separator according to any one of claims 1 to 29, **characterised in that** the oil mist separator (1) encompasses a housing, which is closed during operation by means of a removable housing cover (15), and that the diffusion separation body or bodies (2, 2', 2") form an exchangeable structural unit.

## Revendications

1. Séparateur de vapeur d'huile (1) d'un moteur à combustion interne, avec au moins un corps de séparation par diffusion (2) perméable au gaz, pouvant être parcouru par le gaz de purge de vilebrequin du moteur à combustion interne dans lequel de la vapeur d'huile contenue dans le gaz de purge de vilebrequin peut être séparée du gaz,
**caractérisé en ce**
**que** des canaux de gaz libres continus (20) sont réalisés en outre dans le/chaque corps de séparation par diffusion (2) et qu'au moins un autre corps de séparation par diffusion (2') ou une surface de séparation par rebondissement (4) est disposé(e) derrière les canaux de gaz (20), vus dans le sens d'écoulement du gaz de purge de vilebrequin, à distance du/de chaque corps de séparation par diffusion (2).

2. Séparateur de vapeur d'huile selon la revendication 1, **caractérisé en ce que** les canaux de gaz (20) s'étendent perpendiculairement à un plan superficiel du corps de séparation par diffusion (2) et que l'autre corps de séparation par diffusion (2') ou la surface de séparation par rebondissement (4) s'étend parallèlement au plan superficiel du corps de séparation par diffusion (2).

3. Séparateur de vapeur d'huile selon la revendication 1 ou 2, **caractérisé en ce que** l'autre corps de séparation par diffusion (2') ou la surface de séparation par rebondissement (4) présente au moins un passage de gaz (30) décalé par rapport aux canaux de gaz (20) du corps de séparation par diffusion (2).

4. Séparateur de vapeur d'huile selon la revendication 3, **caractérisé en ce qu'**au moins un autre corps de séparation par diffusion (2") ou une autre surface de séparation par rebondissement (4') est disposé(e) derrière le passage de gaz (30), vu dans le sens d'écoulement du gaz de purge de vilebrequin, à distance de celui-ci.

5. Séparateur de vapeur d'huile selon une des revendications 1 à 4, **caractérisé en ce que** la surface de séparation par rebondissement (4) ou au moins une des surfaces de séparation par rebondissement (4, 4') est formée par une plaque de rebondissement fermée, étanche au gaz et à l'huile.

6. Séparateur de vapeur d'huile selon une des revendications 1 à 5, **caractérisé en ce que** le corps de séparation par diffusion (2) ou les corps de séparation par diffusion (2, 2') et la surface de séparation par rebondissement (4) ou les surfaces de séparation par rebondissement (4, 4') ont chacun une forme cylindrique creuse et sont disposés de manière concentrique les uns par rapport aux autres autour d'un axe médian (19).

7. Séparateur de vapeur d'huile selon une des revendications 1 à 5, **caractérisé en ce que** le corps de séparation par diffusion (2) ou les corps de séparation par diffusion (2, 2') et la surface de séparation par rebondissement (4) ou les surfaces de séparation par rebondissement (4, 4') sont chacun disposés en forme de spirale, vus en coupe transversale.

8. Séparateur de vapeur d'huile selon une des revendications 1 à 6, **caractérisé en ce que** le corps de séparation par diffusion (2) ou les corps de séparation par diffusion (2, 2') et la plaque de rebondissement (4) ou les plaques de rebondissement (4, 4') ont une forme plane plate et sont disposés parallèlement les uns aux autres.

9. Séparateur de vapeur d'huile selon une des revendications 1 à 8, **caractérisé en ce qu'**au moins un corps d'appui perméable au gaz et à l'huile (5) est disposé entre les corps de séparation par diffusion (2, 2') ou entre le corps de séparation par diffusion (2, 2') et la surface de séparation par rebondissement disposée en aval (4).

10. Séparateur de vapeur d'huile selon la revendication 9, **caractérisé en ce que** le corps d'appui (5) est formé par une grille tridimensionnelle.

11. Séparateur de vapeur d'huile selon la revendication 9 ou 10, **caractérisé en ce que** le corps d'appui (5) a une forme et/ou structure qui a une fonction conductrice de gaz pour le gaz parcourant le corps d'appui (5) et/ou une fonction de séparation pour la vapeur d'huile contenue dans le gaz parcourant le corps d'appui (5).

12. Séparateur de vapeur d'huile selon une des revendications 1 à 11, **caractérisé en ce que** le ou chaque corps de séparation par diffusion (2, 2') présente au moins un corps en fibres ou mousse (25).

13. Séparateur de vapeur d'huile selon la revendication 12, **caractérisé en ce qu'**un matériau formant le corps en fibres ou mousse (25) est en forme de bande dans un état de départ et présente une épaisseur assez faible en tant que corps en fibres ou mousse (25), et que le matériau en forme de bande est enroulé en le corps en fibres ou mousse (25).

14. Séparateur de vapeur d'huile selon la revendication 12 et la revendication 9 ou 10, **caractérisé en ce qu'**un matériau formant le corps en fibres ou mousse (25) est en forme de bande dans un état de départ et présente une épaisseur correspondant à l'épaisseur du corps en fibres ou mousse (25), et que le matériau en forme de bande est enroulé avec le corps d'appui également en forme de bande dans un état de départ sous forme de spirale en le corps en fibres ou mousse (25) ou en plusieurs corps en fibres ou mousse (25).

15. Séparateur de vapeur d'huile selon la revendication 12, **caractérisé en ce que** le/chaque corps en fibres ou mousse (25) a la forme d'un profil creux, de préférence d'un cylindre creux.

16. Séparateur de vapeur d'huile selon une des revendications 12 à 14, **caractérisé en ce que** le ou chaque corps de séparation par diffusion (2, 2') présente un corps porteur (26) portant le(s) corps en fibres ou mousse (25), outre l'au moins un corps en fibres ou mousse (25).

17. Séparateur de vapeur d'huile selon une des revendications 12 à 16, **caractérisé en ce que** le ou chaque corps en fibres (25) est fabriqué à partir d'un matériau de feutre en fibres synthétiques thermoplastiques ou thermodurcissables ou fibres métalliques ou fibres de carbone ou fibres de verre ou à partir d'un matériau de papier.

18. Séparateur de vapeur d'huile selon une des revendications 12 à 16, **caractérisé en ce que** le corps en fibres (25) est fabriqué à partir d'un non tissé ou tissu ou d'une tige oscillante ou d'un tissu à mailles ou tricot en fibres synthétiques thermoplastiques ou thermodurcissables ou fibres métalliques ou fibres de carbone ou fibres de verre.

19. Séparateur de vapeur d'huile selon la revendication 12, **caractérisé en ce que** le corps en mousse est fabriqué à partir d'une mousse synthétique ou métallique ou de verre.

20. Séparateur de vapeur d'huile selon la revendication 19, **caractérisé en ce que** le corps en mousse est fabriqué à partir d'un plastique de mousse thermoplastique ou thermodurcissable à cellules ouvertes.

21. Séparateur de vapeur d'huile selon une des revendications 1 à 11, **caractérisé en ce que** le ou chaque corps de séparation par diffusion (2, 2') présente au moins un corps fritté.

22. Séparateur de vapeur d'huile selon une des revendications 1 à 21, **caractérisé en ce que** les canaux de gaz (20) sont fondus ou soudés ou percés ou estampés ou plongés ou découpés directement dans le matériau du corps en fibres (25) ou corps en mousse ou corps fritté.

23. Séparateur de vapeur d'huile selon une des revendications 1 à 21, **caractérisé en ce que** les canaux de gaz (20) sont formés à travers des manchons (22) insérés dans le matériau du corps en fibres (25) ou corps en mousse ou corps fritté.

24. Séparateur de vapeur d'huile selon une des revendications 1 à 21, **caractérisé en ce que** les canaux de gaz (20) sont disposés dans une région de transition entre au moins une extrémité frontale ou un bord du corps en fibres (25) ou corps en mousse ou corps fritté et une région voisine de celui-ci du corps porteur associé (26).

25. Séparateur de vapeur d'huile selon la revendication 24, **caractérisé en ce que** le corps porteur (26) présente sur son côté tourné vers le corps en fibres (25) ou corps en mousse ou corps fritté des rainures (26') ouvertes vers celui-ci qui sont limitées par l'extrémité frontale ou le bord du corps en fibres (25) ou corps en mousse ou corps fritté par rapport aux canaux de gaz (20).

26. Séparateur de vapeur d'huile selon la revendication 24, **caractérisé en ce que** le corps porteur (26) est en deux ou plusieurs parties et qu'une partie de corps porteur (27) possède sur son côté tourné vers l'extrémité frontale ou le bord du corps en fibres (25) ou corps en mousse ou corps fritté une ou plusieurs cannelures saillantes (27') ou paires de cannelures (27') qui enfoncent partiellement du côté du bord à l'état relié des parties de corps porteur (26, 27) le corps en fibres (25) ou corps en mousse ou corps fritté et forment ainsi les canaux de gaz (20).

27. Séparateur de vapeur d'huile selon une des revendications 1 à 26, **caractérisé en ce que** les canaux de gaz (20) sont réalisés avec un rétrécissement de type buse (24) du côté de la sortie.

28. Séparateur de vapeur d'huile selon une des revendications 1 à 27, **caractérisé en ce que** l'autre corps de séparation par diffusion (2') ou encore l'autre corps de séparation par diffusion (2") ou la surface de séparation par rebondissement (4) ou au moins une des surfaces de séparation par rebondissement (4, 4') ou à chaque fois une partie de ceux-ci peuvent être réglés par rapport aux canaux de gaz (20) ou par rapport au passage de gaz (30) à l'encontre d'une force de rappel de sorte qu'en cas de pression différentielle au-dessus du séparateur de vapeur d'huile (1) en dessous d'une valeur limite pouvant être prédéfinie, les canaux de gaz (20) et le passage de gaz (30) sont fermés par l'autre corps de séparation par diffusion (2') ou encore l'autre corps de séparation par diffusion (2") ou la surface de séparation par rebondissement (4), et qu'en cas de pression différentielle au-dessus du séparateur de vapeur d'huile (1) au-dessus d'une valeur limite pouvant être prédéfinie, les canaux de gaz (20) et le passage de gaz (30) sont ouverts par coulissement de l'autre corps de séparation par diffusion (2') ou encore de l'autre corps de séparation par diffusion (2") ou de la/des surface(s) de séparation par rebondissement (4, 4') à l'encontre de la force de rappel.

29. Séparateur de vapeur d'huile selon une des revendications 1 à 27, **caractérisé en ce qu'**au moins une soupape séparée (41) est associée aux canaux de gaz (20) ou au passage de gaz (30).

30. Séparateur de vapeur d'huile selon une des revendications 1 à 29, **caractérisé en ce que** le séparateur de vapeur d'huile (1) présente un logement qui est fermé en fonctionnement avec un couvercle de logement amovible (15), et que le ou les corps de séparation par diffusion (2, 2', 2") forment une unité modulaire permutable.
